# EUROPEAN PATENT APPLICATION

(11) **EP 4 779 424 A1**
(43) Date of publication of application: **22.07.2026**
(21) Application number: 25197087.7
(22) Date of filing: 20.08.2025
(51) Int. Cl.: G05D 1/229, G05D 1/243, G05D 1/689, G05D 105/15, G05D 107/20, G05D 109/10, G05D 111/10, A01B 69/00

(54) **DETERMINING A STATE PRESCRIPTION FOR A FARMING MACHINE**

(30) Priority: 17.01.2025 US 202519029950
(71) Applicant: Deere & Company, Moline, IL 61265 (US)
(72) Inventor: Goldstein, Jacob H, Santa Clara, 95054 (US); Elcano, Michael Albert, Santa Clara, 95054 (US); Ostrowski, James Patrick, Santa Clara, 95054 (US)
(74) Representative: Reddie & Grose LLP

(57) **Abstract**

A farming machine and corresponding methods for determining a state prescription for an autonomous farming machine are disclosed. This method can optimize a farming machine's machine states during its navigation through an operating environment to meet specific farming objectives. A prescription generation module, composed of a point identification model and an optimization model, identifies interaction points in the field based on a series of features and metadata and calculates optimal machine states at each interaction point. Objective scores are calculated for potential machine states, with the highest scoring state identified as the optimal state for the prescription. This system can select states for the prescription based on factors including environmental conditions, farming actions, and objective adherence. The method is designed to promote efficient machine use, path determination, and overall agricultural productivity.

## Description

### BACKGROUND

### FIELD OF DISCLOSURE

This disclosure relates to the field of autonomously navigating a farming machine through a field, and, more specifically, to determining a machine state prescription for accomplishing a farming objective when autonomously navigating the farming machine through a field.

### DESCRIPTION OF RELATED ART

In the past, the responsibility of determining machine states to achieve various objectives fell largely on the farmers. They were required to monitor and adjust these states in real-time as they piloted their farming machines across extensive acres of land. This was an especially demanding and complex task, with numerous variables like fuel consumption, load conditions, soil resistance, and weather conditions complicating the decision-making process. Furthermore, traditional farming machines were not equipped with advanced data-gathering capabilities, rendering the task all the more challenging. The lack of comprehensive data pertaining to engine performance, machine health, and environmental conditions significantly limited the scope and accuracy of these real-time adjustments made by farming.

In addressing this shortfall, there is a substantial need for a farming machine capable of providing high-quality data to inform autonomous, real-time decisions regarding autonomous farming machine states. These decisions, when made accurately and quickly in the field, have the potential to significantly boost efficiency and optimization of the machine's operation and farming objective outcomes. These systems and methods, when enabled, could provide for autonomously generated machine state prescriptions that take into account diverse factors for well-informed and efficient agricultural practices.

### SUMMARY

In some aspects, the techniques described herein relate to a method determining a locomotion mechanism state prescription for an autonomous farming machine, the method including: accessing a path of a farming machine through an operating environment including a field, the path including a plurality of interaction points, and one or more of the interaction points corresponding to farming actions the farming machine performs at the interaction point to accomplish a farming objective, and wherein the farming machine is configurable between a plurality of locomotion mechanism states between the interaction points; applying a state prescription model to the path to generate the locomotion mechanism state prescription for the farming machine, the state prescription model: for each interaction point of the plurality of interaction points along the path, determining, for each of the plurality of locomotion mechanism states, an objective score for the interaction point based on farming actions performed at the point and the locomotion mechanism state; and identifying the locomotion mechanism state having a highest objective score at the point as a prescribed locomotion mechanism state for the interaction point; generating locomotion mechanism the state prescription for the path, the locomotion mechanism state prescription including the prescribed locomotion mechanism state for each interaction point of the plurality of interaction points on the path; and actuating the locomotion mechanism of the farming machine to implement the locomotion mechanism state prescription as the farming machine traverses the path in the field.

In some aspects, the techniques described herein relate to a method, wherein the plurality of locomotion mechanism states includes, at least: an off state in which the locomotion mechanism is turned off, a stop state in which a locomotion mechanism of the farming machine is disengaged, an idle state in which the locomotion mechanism of the farming machine is idled, and a drive state in which the locomotion mechanism of the farming machine is engaged.

In some aspects, the techniques described herein relate to a method, wherein the drive state includes a plurality of sub-states, each of the plurality of sub-states defining one or more of a velocity, a direction, and an acceleration implemented by the locomotion mechanism.

In some aspects, the techniques described herein relate to a method, wherein calculating the objective score includes: for each interaction point of the plurality of interaction points on the path: determining, for each locomotion mechanism state of the plurality, a probability that performing a farming action at the interaction point when the locomotion mechanism is in a locomotion mechanism state advances the farming objective.

In some aspects, the techniques described herein relate to a method, wherein the farming objective includes optimizing a performance of farming actions in the field for a time efficiency.

In some aspects, the techniques described herein relate to a method, wherein the farming objective includes optimizing a performance of farming actions at interaction points in the field for a cost efficiency.

In some aspects, the techniques described herein relate to a method, wherein the farming objective includes optimizing a performance of farming actions at interaction points in the environment outside the field.

In some aspects, the techniques described herein relate to a method determining a locomotion mechanism state prescription for an autonomous farming machine, the method including: accessing a plurality of locomotion mechanism states of a farming machine, the farming machine configurable between the plurality of locomotion mechanism states; identifying a plurality of interaction points in an operating environment including a field, each of the interaction points corresponding to locations in the field where the farming machine performs farming actions to accomplish a farming objective; applying a prescription generation model to the plurality of interaction points to generate a path for the farming machine in the field and a machine state prescription for the farming machine along the path, the prescription generation model : for each interaction point of the plurality of interaction points in the field, calculating, for each of the plurality of locomotion mechanism states, an objective score for the interaction point based on farming actions performed at the interaction point and the locomotion mechanism state; identifying the locomotion mechanism state having a highest objective score at the interaction point as a prescribed locomotion mechanism state for the interaction point; and generating the path and the locomotion mechanism state prescription for the farming machine, the path including one or more interaction points and the locomotion mechanism state prescription including the prescribed locomotion mechanism state for its corresponding interaction point; and actuating the locomotion mechanism of the farming machine to implement the path using the locomotion mechanism state prescription as the farming machine traverses the field.

In some aspects, the techniques described herein relate to a method, wherein the plurality of locomotion mechanism states includes, at least: an off state in which the locomotion mechanism is turned off, a stop state in which a locomotion mechanism of the farming machine is disengaged, an idle state in which the locomotion mechanism of the farming machine is idled, and a drive state in which the locomotion mechanism of the farming machine is engaged.

In some aspects, the techniques described herein relate to a method, wherein the drive state includes a plurality of sub-states, each of the plurality of sub-states defining one or more of a velocity, a direction, and an acceleration implemented by the locomotion mechanism.

In some aspects, the techniques described herein relate to a method, wherein calculating the objective score includes: for each interaction point of the plurality of interaction points on the path: determining, for each locomotion mechanism state of the plurality, a probability that performing a farming action at the interaction point when the locomotion mechanism is in a locomotion mechanism state advances the farming objective.

In some aspects, the techniques described herein relate to a method, wherein the farming objective includes optimizing a performance of farming actions in the field for a time efficiency.

In some aspects, the techniques described herein relate to a method, wherein the farming objective includes optimizing a performance of farming actions at interaction points in the field for a cost efficiency.

In some aspects, the techniques described herein relate to a method, wherein the farming objective includes optimizing a performance of farming actions at interaction points in the operating environment outside the field.

In some aspects, the techniques described herein relate to a farming machine including: a locomotion mechanism configured to propel the farming machine through an operating environment including a field when actuated, and wherein the locomotion mechanism is configurable between a plurality of locomotion mechanism states; an identification system configured to capture images of the field and identify interaction points in the field based on the images; a control system including one or more processors configured to generate a state prescription for the farming machine; and a non-transitory computer-readable storage medium including computer program instructions for generating the state prescription, the instructions, when actuated by the one or more processors, causing the one or more processors to: access a path of the farming machine through a field, the path including a plurality of interaction points identified by the identification system, and one or more of the interaction points corresponding to farming actions the farming machine performs at the interaction point to accomplish a farming objective; apply a state prescription model to the path to generate the state prescription for the farming machine, the state prescription model: for each interaction point of the plurality of interaction points along the path, determine, for each of the plurality of locomotion mechanism states, an objective score for the interaction point based on farming actions performed at the point and the locomotion mechanism state; and identify the locomotion mechanism state having a highest objective score at the point as a prescribed locomotion mechanism state for the interaction point; generate the state prescription for the path, the state prescription including the prescribed locomotion mechanism state for each interaction point of the plurality of interaction points on the path; and actuate the locomotion mechanism of the farming machine to implement the locomotion mechanism state prescription as the farming machine traverses the path in the field.

In some aspects, the techniques described herein relate to a farming machine, wherein the plurality of locomotion mechanism states includes, at least: an off state in which the locomotion mechanism is turned off, a stop state in which a locomotion mechanism of the farming machine is disengaged, an idle state in which the locomotion mechanism of the farming machine is idled, and a drive state in which the locomotion mechanism of the farming machine is engaged.

In some aspects, the techniques described herein relate to a farming machine, wherein calculating the objective score includes: for each interaction point of the plurality of interaction points on the path: determining, for each locomotion mechanism state of the plurality, a probability that performing a farming action at the interaction point when the locomotion mechanism is in a locomotion mechanism state advances the farming objective.

In some aspects, the techniques described herein relate to a farming machine, wherein the farming objective includes optimizing a performance of farming actions in the field for a time efficiency.

In some aspects, the techniques described herein relate to a farming machine, wherein the farming objective includes optimizing a performance of farming actions at interaction points in the field for a cost efficiency.

In some aspects, the techniques described herein relate to a farming machine, wherein the farming objective includes optimizing a performance of farming actions at interaction points in the operating environment outside of the field.

### BRIEF DESCRIPTION OF DRAWINGS

Figure ("FIG.") 1A is an isometric view of a farming machine that performs farming actions of a treatment plan, according to one example embodiment, in accordance with one or more example embodiments.
FIG. 1B is a top view of the farming machine in FIG. 1A, in accordance with one or more example embodiments.
FIG. 1C is an isometric view of another farming machine that performs farming actions of a treatment plan, in accordance with one or more example embodiments..
FIG. 2 is a block diagram of the system environment for the farming machine 100, in accordance with one or more example embodiments.
FIG. 3 illustrates the prescription generation module, in accordance with one or more example embodiments.
FIG. 4 illustrates a workflow diagram for generating a state prescription for a farming machine using a prescription generation module, in accordance with one or more example embodiments.
FIG. 5A is a field wherein which a farming machine 540 follows a predetermined trajectory, in accordance with one or more example embodiments.
FIG. 5B illustrates the field with the accessed interaction points, in accordance with one or more example embodiments.
FIG. 5C illustrates the calculation of objective scores for the various locomotion states at each interaction point, in accordance with one or more example embodiments.
FIG. 5D illustrates the generation of a path and the state prescription, in accordance with one or more example embodiments.
FIG. 5E illustrates the farming machine following the path from the prescription generation module, in accordance with one or more example embodiments.
FIG. 6 illustrates a workflow diagram for generating a state prescription for a farming machine using a prescription generation module, in accordance with one or more example embodiments.
FIG. 7 is a block diagram illustrating components of an example machine for reading and executing instructions from a machine-readable medium.

The figures depict various embodiments for purposes of illustration only. One skilled in the art will readily recognize from the following discussion that alternative embodiments of the structures and methods illustrated herein may be employed without departing from the principles described herein.

### DETAILED DESCRIPTION

### I. INTRODUCTION

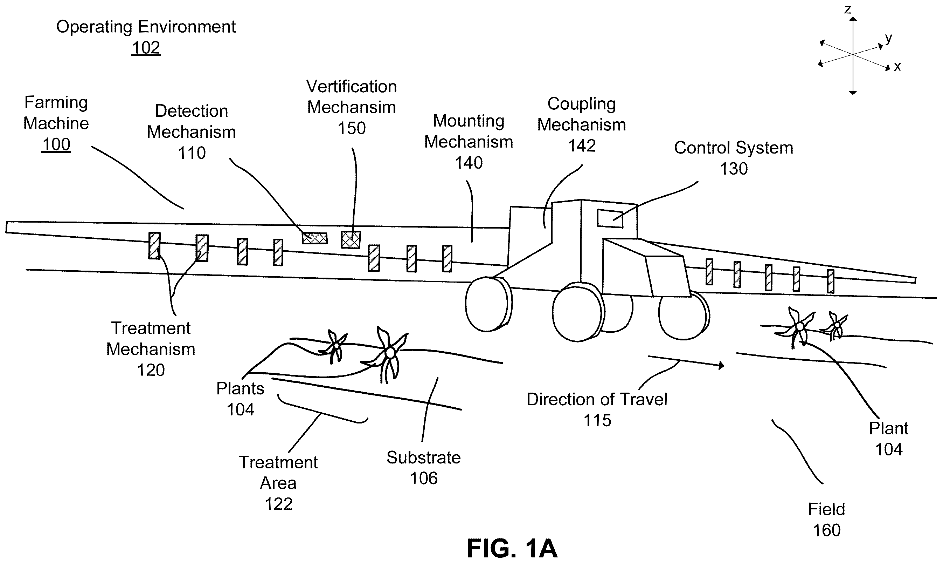

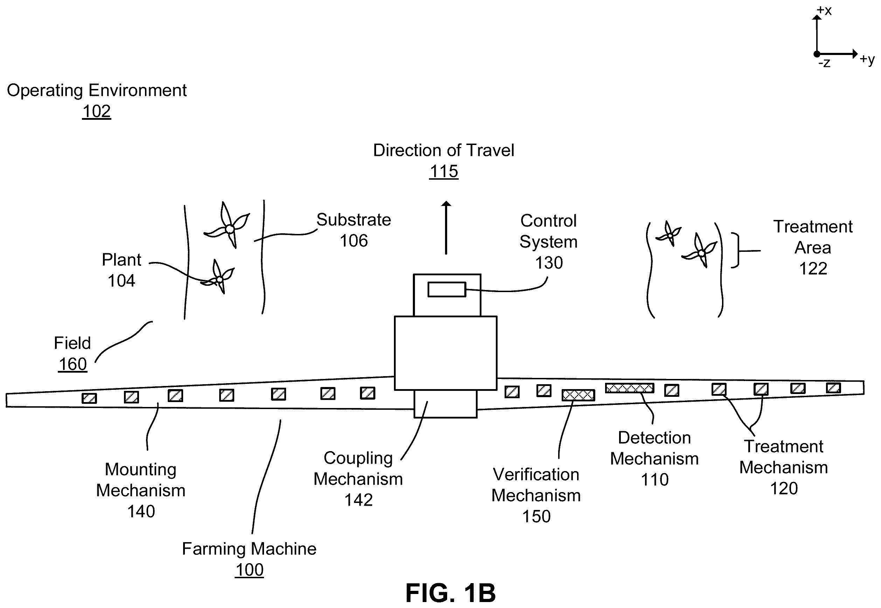

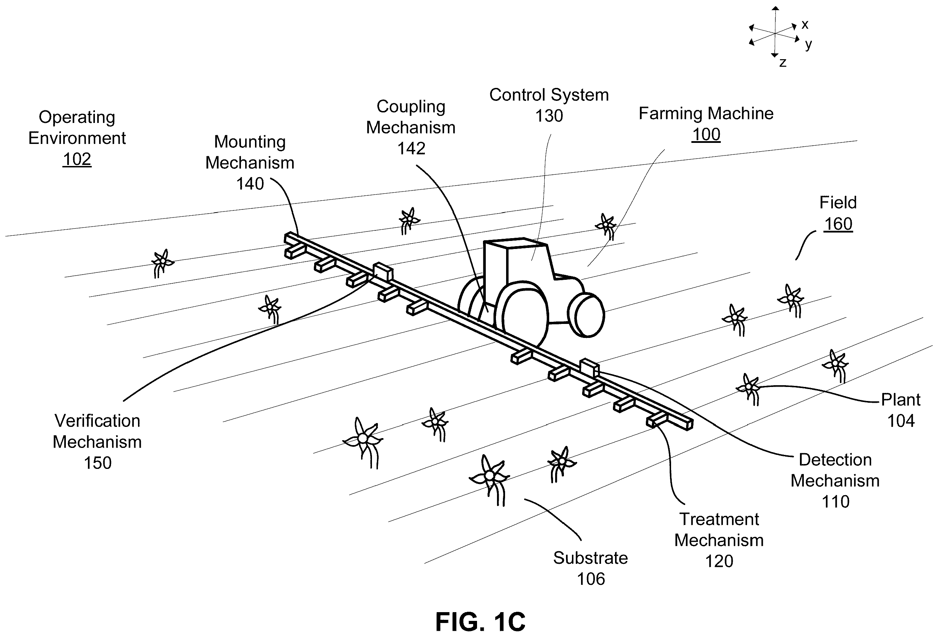

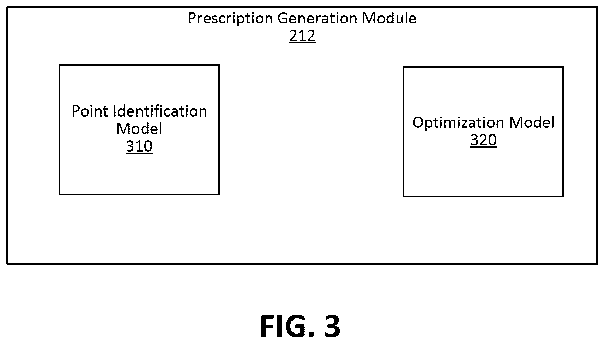

Embodiments relate to generating a machine state prescription for a farming machine such that it can implement farming action to accomplish a farming objective in a field. FIGs. 1-2 describe general information related to example farming machines. FIGs. 3-6 describe generation of state prescriptions for autonomous or semi-autonomous farming machines.

### II. FIELD MANAGEMENT AND TREATMENT PLANS

### Field Management

Agricultural managers ("managers") are responsible for managing farming operations in one or more fields. Managers work to implement a farming objective within those fields and select from among a variety of farming actions to implement that farming objective. Traditionally, managers are, for example, a farmer or agronomist that works the field but could also be other people and/or systems configured to manage farming operations within the field. For example, a manager could be an automated farming machine, a machine learned computer model, etc. In some cases, a manager may be a combination of the managers described above. For example, a manager may include a farmer assisted by a machine learned agronomy model and one or more automated farming machines or could be a farmer and an agronomist working in tandem.

Managers implement one or more farming objectives for a field. A farming objective is typically a macro-level goal for a field. For example, macro-level farming objectives may include treating crops with growth promotors, neutralizing weeds with growth pesticides, harvesting a crop with the best possible crop yield, or any other suitable farming objective. However, farming objectives may also be a micro-level goal for the field. For example, micro-level farming objectives may include treating a particular plant in the field, repairing or correcting a part of a farming machine, requesting feedback from a manager, etc. Of course, there are many possible farming objectives and combinations of farming objectives, and the previously described examples are not intended to be limiting.

Farming objectives are accomplished by one or more farming machines performing a series of farming actions. Farming machines are described in greater detail below. Farming actions are any operation implementable by a farming machine within the field that works towards a farming objective. Consider, for example, a farming objective of harvesting a crop with the best possible yield. This farming objective requires a litany of farming actions, e.g., planting the field, fertilizing the plants 104, watering the plants 104, weeding the field, harvesting the plants 104, evaluating yield, etc. Similarly, each farming action pertaining to harvesting the crop may be a farming objective in and of itself. For instance, planting the field can require its own set of farming actions, e.g., preparing the soil, digging in the soil, planting a seed, etc.

In other words, managers implement a treatment plan in the field to accomplish a farming objective. A treatment plan is a hierarchical set of macro-level and/or micro-level objectives that accomplish the farming objective of the manager. Within a treatment plan, each macro or micro-objective may require a set of farming actions to accomplish, or each macro or micro-objective may be a farming action itself. So, to expand, the treatment plan is a temporally sequenced set of farming actions to apply to the field that the manager expects will accomplish the farming objective.

When executing a treatment plan in a field, the treatment plan itself and/or its constituent farming objectives and farming actions have various results. A result is a representation as to whether, or how well, a farming machine accomplished the treatment plan, farming objective, and/or farming action. A result may be a qualitative measure such as "accomplished" or "not accomplished," or may be a quantitative measure such as "40 pounds harvested," or "1.25 acres treated." Results can also be positive or negative, depending on the configuration of the farming machine or the implementation of the treatment plan. Moreover, results can be measured by sensors of the farming machine, input by managers, or accessed from a datastore or a network.

Traditionally, managers have leveraged their experience, expertise, and technical knowledge when implementing farming actions in a treatment plan. In a first example, a manager may spot check weed pressure in several areas of the field to determine when a field is ready for weeding. In a second example, a manager may refer to previous implementations of a treatment plan to determine the best time to begin planting a field. Finally, in a third example, a manager may rely on established best practices in determining a specific set of farming actions to perform in a treatment plan to accomplish a farming objective.

Leveraging manager and historical knowledge to make decisions for a treatment plan affects both spatial and temporal characteristics of a treatment plan. For instance, farming actions in a treatment plan have historically been applied to an entire field rather than small portions of a field. To illustrate, when a manager decides to plant a crop, she plants the entire field instead of just a corner of the field having the best planting conditions; or, when the manager decides to weed a field, she weeds the entire field rather than just a few rows. Similarly, each farming action in the sequence of farming actions of a treatment plan are historically performed at approximately the same time. For example, when a manager decides to fertilize a field, she fertilizes the field at approximately the same time; or, when the manager decides to harvest the field, she does so at approximately the same time.

Notably though, farming machines have greatly advanced in their capabilities. For example, farming machines continue to become more autonomous, include an increasing number of sensors and measurement devices, employ higher amounts of processing power and connectivity, and implement various machine vision algorithms to enable managers to successfully implement a treatment plan.

Because of this increase in capability, managers are no longer limited to spatially and temporally monolithic implementations of farming actions in a treatment plan. Instead, managers may leverage advanced capabilities of farming machines to implement treatment plans that are highly localized and determined by real-time measurements in the field. In other words, rather than a manager applying a "best guess" treatment plan to an entire field, they can implement individualized and informed treatment plans for each plant in the field.

### III. FARMING MACHINE

### Overview

A farming machine that implements farming actions of a treatment plan may have a variety of configurations, some of which are described in greater detail below.

FIG. 1A is an isometric view of a farming machine 100 that performs farming actions of a treatment plan, according to one example embodiment, and FIG. 1B is a top view of the farming machine 100 in FIG. 1A. FIG. 1C is an isometric view of another farming machine 100 that performs farming actions of a treatment plan, in accordance with one example embodiment.

The farming machine 100 includes a detection mechanism 110, a treatment mechanism 120, and a control system 130. The farming machine 100 can additionally include a mounting mechanism 140, a verification mechanism 150, a power source, digital memory, communication apparatus, or any other suitable component that enables the farming machine 100 to implement farming actions in a treatment plan. Moreover, the described components and functions of the farming machine 100 are just examples, and a farming machine 100 can have different or additional components and functions other than those described below.

The farming machine 100 is configured to perform farming actions in a field 160, and the implemented farming actions are part of a treatment plan. To illustrate, the farming machine 100 implements a farming action which applies a treatment to one or more plants 104 and/or the substrate 106 within a geographic area. Here, the treatment farming actions are included in a treatment plan to regulate plant growth. As such, treatments are typically applied directly to a single plant 104, but can alternatively be directly applied to multiple plants 104, indirectly applied to one or more plants 104, applied to the environment 102 associated with the plant 104 (e.g., soil, atmosphere, or other suitable portion of the plant's environment adjacent to or connected by an environmental factors, such as wind), or otherwise applied to the plants 104.

In a particular example, the farming machine 100 is configured to implement a farming action which applies a treatment that necroses the entire plant 104 (e.g., weeding) or part of the plant 104 (e.g., pruning). In this case, the farming action can include dislodging the plant 104 from the supporting substrate 106, incinerating a portion of the plant 104 (e.g., with directed electromagnetic energy such as a laser), applying a treatment concentration of working fluid (e.g., fertilizer, hormone, water, etc.) to the plant 104, or treating the plant 104 in any other suitable manner.

In another example, the farming machine 100 is configured to implement a farming action which applies a treatment to regulate plant growth. Regulating plant growth can include promoting plant growth, promoting growth of a plant portion, hindering (e.g., retarding) plant 104 or plant portion growth, or otherwise controlling plant growth. Examples of regulating plant growth includes applying growth hormone to the plant 104, applying fertilizer to the plant 104 or substrate 106, applying a disease treatment or insect treatment to the plant 104, electrically stimulating the plant 104, watering the plant 104, pruning the plant 104, or otherwise treating the plant 104. Plant growth can additionally be regulated by pruning, necrosing, or otherwise treating the plants 104 adjacent to the plant 104.

### Operating Environment 102

The farming machine 100 operates in an operating environment 102. The operating environment 102 is the environment 102 surrounding the farming machine 100 while it implements farming actions of a treatment plan. The operating environment 102 may also include the farming machine 100 and its corresponding components itself.

The operating environment 102 typically includes a field 160, and the farming machine 100 generally implements farming actions of the treatment plan in the field 160. A field 160 is a geographic area where the farming machine 100 implements a treatment plan. The field 160 may be an outdoor plant field but could also be an indoor location that houses plants such as, e.g., a greenhouse, a laboratory, a grow house, a set of containers, or any other suitable environment 102.

A field 160 may include any number of field portions. A field portion is a subunit of a field 160. For example, a field portion may be a portion of the field 160 small enough to include a single plant 104, large enough to include many plants 104, or some other size. The farming machine 100 can execute different farming actions for different field portions. For example, the farming machine 100 may apply an herbicide for some field portions in the field 160, while applying a pesticide in another field portion. Moreover, a field 160 and a field portion are largely interchangeable in the context of the methods and systems described herein. That is, treatment plans and their corresponding farming actions may be applied to an entire field 160 or a field portion depending on the circumstances at play.

The operating environment 102 may also include plants 104. As such, farming actions the farming machine 100 implements as part of a treatment plan may be applied to plants 104 in the field 160. The plants 104 can be crops but could also be weeds or any other suitable plant 104. Some example crops include cotton, lettuce, soybeans, rice, carrots, tomatoes, corn, broccoli, cabbage, potatoes, wheat, or any other suitable commercial crop. The weeds may be grasses, broadleaf weeds, thistles, or any other suitable determinantal weed.

More generally, plants 104 may include a stem that is arranged superior to (e.g., above) the substrate 106 and a root system joined to the stem that is located inferior to the plane of the substrate 106 (e.g., below ground). The stem may support any branches, leaves, and/or fruits. The plant 104 can have a single stem, leaf, or fruit, multiple stems, leaves, or fruits, or any number of stems, leaves or fruits. The root system may be a tap root system or fibrous root system, and the root system may support the plant 104 position and absorb nutrients and water from the substrate 106. In various examples, the plant 104 may be a vascular plant 104, non-vascular plant 104, ligneous plant 104, herbaceous plant 104, or be any suitable type of plant 104.

Plants 104 in a field 160 may be grown in one or more plant 104 rows (e.g., plant 104 beds). The plant 104 rows are typically parallel to one another but do not have to be. Each plant 104 row is generally spaced between 2 inches and 45 inches apart when measured in a perpendicular direction from an axis representing the plant 104 row. Plant 104 rows can have wider or narrower spacings or could have variable spacing between multiple rows (e.g., a spacing of 12 in. between a first and a second row, a spacing of 16 in. a second and a third row, etc.).

Plants 104 within a field 160 may include the same type of crop (e.g., same genus, same species, etc.). For example, each field portion in a field 160 may include corn crops. However, the plants 104 within each field 160 may also include multiple crops (e.g., a first, a second crop, etc.). For example, some field portions may include lettuce crops while other field portions include pig weeds, or, in another example, some field portions may include beans while other field portions include corn. Additionally, a single field portion may include different types of crop. For example, a single field portion may include a soybean plant 104 and a grass weed.

The operating environment 102 may also include a substrate 106. As such, farming actions the farming machine 100 implements as part of a treatment plan may be applied to the substrate 106. The substrate 106 may be soil but can alternatively be a sponge or any other suitable substrate 106. The substrate 106 may include plants 104 or may not include plants 104 depending on its location in the field 160. For example, a portion of the substrate 106 may include a row of crops, while another portion of the substrate 106 between crop rows includes no plants 104.

### III. A Example Machine Configurations

### Detection mechanism(s)

The farming machine 100 may include a detection mechanism 110. The detection mechanism 110 identifies objects in the operating environment 102 of the farming machine 100. To do so, the detection mechanism 110 obtains information describing the environment 102 (e.g., sensor or image data), and processes that information to identify pertinent objects (e.g., plants 104, substrate 106, persons, etc.) in the operating environment 102. Identifying objects in the environment 102 further enables the farming machine 100 to implement farming actions in the field 160. For example, the detection mechanism 110 may capture an image of the field 160 and process the image with a plant treatment model that identifies plants 104 in the captured image. A plant treatment model may also determine farming actions to implement. The farming machine 100 then implements farming actions in the field 160 based on the output of the plant treatment model.

The farming machine 100 can include any number or type of detection mechanism 110 that may aid in determining and implementing farming actions. In some embodiments, the detection mechanism 110 includes one or more sensors. For example, the detection mechanism 110 can include a multispectral camera, a stereo camera, a CCD camera, a single lens camera, a CMOS camera, hyperspectral imaging system, LIDAR system (light detection and ranging system), a depth sensing system, dynamometer, IR camera, thermal camera, humidity sensor, light sensor, temperature sensor, or any other suitable sensor. Further, the detection mechanism 110 may include an array of sensors (e.g., an array of cameras) configured to capture information about the environment 102 surrounding the farming machine 100. For example, the detection mechanism 110 may include an array of cameras configured to capture an array of pictures representing the environment 102 surrounding the farming machine 100. The detection mechanism 110 may also be a sensor that measures a state of the farming machine 100. For example, the detection mechanism 110 may be a speed sensor, a heat sensor, or some other sensor that can monitor the state of a component of the farming machine 100. Additionally, the detection mechanism 110 may also be a sensor that measures components during implementation of a farming action. For example, the detection mechanism 110 may be a flow rate monitor, a grain harvesting sensor, a mechanical stress sensor etc. Whatever the case, the detection mechanism 110 senses information about the operating environment 102 (including the farming machine 100).

A detection mechanism 110 may be mounted at any point on the mounting mechanism 140. Depending on where the detection mechanism 110 is mounted relative to the treatment mechanism 120, one or the other may pass over a geographic area in the field 160 before the other. For example, the detection mechanism 110 may be positioned on the mounting mechanism 140 such that it traverses over a geographic location before the treatment mechanism 120 as the farming machine 100 moves through the field 160. In another examples, the detection mechanism 110 is positioned to the mounting mechanism 140 such that the two traverse over a geographic location at substantially the same time as the farming machine 100 moves through the filed. Similarly, the detection mechanism 110 may be positioned on the mounting mechanism 140 such that the treatment mechanism 120 traverses over a geographic location before the detection mechanism 110 as the farming machine 100 moves through the field 160. The detection mechanism 110 may be statically mounted to the mounting mechanism 140, or may be removably or dynamically coupled to the mounting mechanism 140. In other examples, the detection mechanism 110 may be mounted to some other surface of the farming machine 100 or may be incorporated into another component of the farming machine 100.

### Verification mechanism(s)

The farming machine 100 may include a verification mechanism 150. Generally, the verification mechanism 150 records a measurement of the operating environment 102 and the farming machine 100 may use the recorded measurement to verify or determine the extent of an implemented farming action (i.e., a result of the farming action).

To illustrate, consider an example where a farming machine 100 implements a farming action based on a measurement of the operating environment 102 by the detection mechanism 110. The verification mechanism 150 records a measurement of the same geographic area measured by the detection mechanism 110 and where farming machine 100 implemented the determined farming action. The farming machine 100 then processes the recorded measurement to determine the result of the farming action. For example, the verification mechanism 150 may record an image of the geographic region surrounding a plant 104 identified by the detection mechanism 110 and treated by a treatment mechanism 120. The farming machine 100 may apply a treatment detection algorithm to the recorded image to determine the result of the treatment applied to the plant 104.

Information recorded by the verification mechanism 150 can also be used to empirically determine operation parameters of the farming machine 100 that will obtain the desired effects of implemented farming actions (e.g., to calibrate the farming machine 100, to modify treatment plans, etc.). For instance, the farming machine 100 may apply a calibration detection algorithm to a measurement recorded by the farming machine 100. In this case, the farming machine 100 determines whether the actual effects of an implemented farming action are the same as its intended effects. If the effects of the implemented farming action are different than its intended effects, the farming machine 100 may perform a calibration process. The calibration process changes operation parameters of the farming machine 100 such that effects of future implemented farming actions are the same as their intended effects. To illustrate, consider the previous example where the farming machine 100 recorded an image of a treated plant 104. There, the farming machine 100 may apply a calibration algorithm to the recorded image to determine whether the treatment is appropriately calibrated (e.g., at its intended location in the operating environment 102). If the farming machine 100 determines that the farming machine 100 is not calibrated (e.g., the applied treatment is at an incorrect location), the farming machine 100 may calibrate itself such that future treatments are in the correct location. Other example calibrations are also possible.

The verification mechanism 150 can have various configurations. For example, the verification mechanism 150 can be substantially similar (e.g., be the same type of mechanism as) the detection mechanism 110 or can be different from the detection mechanism 110. In some cases, the detection mechanism 110 and the verification mechanism 150 may be one in the same (e.g., the same sensor). In an example configuration, the verification mechanism 150 is positioned distal the detection mechanism 110 relative the direction of travel 115, and the treatment mechanism 120 is positioned there between. In this configuration, the verification mechanism 150 traverses over a geographic location in the operating environment 102 after the treatment mechanism 120 and the detection mechanism 110. However, the mounting mechanism 140 can retain the relative positions of the system components in any other suitable configuration. In some configurations, the verification mechanism 150 can be included in other components of the farming machine 100.

The farming machine 100 can include any number or type of verification mechanism 150. In some embodiments, the verification mechanism 150 includes one or more sensors. For example, the verification mechanism 150 can include a multispectral camera, a stereo camera, a CCD camera, a single lens camera, a CMOS camera, hyperspectral imaging system, LIDAR system (light detection and ranging system), a depth sensing system, dynamometer, IR camera, thermal camera, humidity sensor, light sensor, temperature sensor, or any other suitable sensor. Further, the verification mechanism 150 may include an array of sensors (e.g., an array of cameras) configured to capture information about the environment 102 surrounding the farming machine 100. For example, the verification mechanism 150 may include an array of cameras configured to capture an array of pictures representing the operating environment 102. Treatment mechanism(s)

The farming machine 100 may include a treatment mechanism 120. The treatment mechanism 120 can implement farming actions in the operating environment 102 of a farming machine 100. For instance, a farming machine 100 may include a treatment mechanism 120 that applies a treatment to a plant 104, a substrate 106, or some other object in the operating environment 102. More generally, the farming machine 100 employs the treatment mechanism 120 to apply a treatment to a treatment area 122, and the treatment area 122 may include anything within the operating environment 102 (e.g., a plant 104 or the substrate 106). In other words, the treatment area 122 may be any portion of the operating environment 102.

When the treatment is a plant treatment, the treatment mechanism 120 applies a treatment to a plant 104 in the field 160. The treatment mechanism 120 may apply treatments to identified plants or non-identified plants. For example, the farming machine 100 may identify and treat a specific plant (e.g., plant 104) in the field 160. Alternatively, or additionally, the farming machine 100 may identify some other trigger that indicates a plant treatment and the treatment mechanism 120 may apply a plant treatment. Some example plant treatment mechanisms 120 include: one or more spray nozzles, one or more electromagnetic energy sources (e.g., a laser), one or more physical implements configured to manipulate plants, but other plant 104 treatment mechanisms 120 are also possible.

Additionally, when the treatment is a plant treatment, the effect of treating a plant 104 with a treatment mechanism 120 may include any of plant necrosis, plant growth stimulation, plant portion necrosis or removal, plant portion growth stimulation, or any other suitable treatment effect. Moreover, the treatment mechanism 120 can apply a treatment that dislodges a plant 104 from the substrate 106, severs a plant 104 or portion of a plant 104 (e.g., cutting), incinerates a plant 104 or portion of a plant 104, electrically stimulates a plant 104 or portion of a plant 104, fertilizes or promotes growth (e.g., with a growth hormone) of a plant 104, waters a plant 104, applies light or some other radiation to a plant 104, and/or injects one or more working fluids into the substrate 106 adjacent to a plant 104 (e.g., within a threshold distance from the plant). Other plant treatments are also possible. When applying a plant treatment, the treatment mechanisms 120 may be configured to spray a treatment product such as one or more of: an herbicide, a fungicide, insecticide, some other pesticide, or water.

When the treatment is a substrate treatment, the treatment mechanism 120 applies a treatment to some portion of the substrate 106 in the field 160. The treatment mechanism 120 may apply treatments to identified areas of the substrate 106, or non-identified areas of the substrate 106. For example, the farming machine 100 may identify and treat an area of substrate 106 in the field 160. Alternatively, or additionally, the farming machine 100 may identify some other trigger that indicates a substrate 106 treatment and the treatment mechanism 120 may apply a treatment to the substrate 106. Some example treatment mechanisms 120 configured for applying treatments to the substrate 106 include: one or more spray nozzles, one or more electromagnetic energy sources, one or more physical implements configured to manipulate the substrate 106, but other substrate 106 treatment mechanisms 120 are also possible.

Of course, the farming machine 100 is not limited to treatment mechanisms 120 for plants 104 and substrates 106. The farming machine 100 may include treatment mechanisms 120 for applying various other treatments to objects in the field 160. Depending on the configuration, the farming machine 100 may include various numbers of treatment mechanisms 120 (e.g., 1, 2, 5, 20, 60, etc.). A treatment mechanism 120 may be fixed (e.g., statically coupled) to the mounting mechanism 140 or attached to the farming machine 100. Alternatively, or additionally, a treatment mechanism 120 may movable (e.g., translatable, rotatable, etc.) on the farming machine 100. In one configuration, the farming machine 100 includes a single treatment mechanism 120. In this case, the treatment mechanism 120 may be actuatable to align the treatment mechanism 120 to a treatment area 122. In a second variation, the farming machine 100 includes a treatment mechanism 120 assembly comprising an array of treatment mechanisms 120. In this configuration, a treatment mechanism 120 may be a single treatment mechanism 120, a combination of treatment mechanisms 120, or the treatment mechanism 120 assembly. Thus, either a single treatment mechanism 120, a combination of treatment mechanisms 120, or the entire assembly may be selected to apply a treatment to a treatment area 122. Similarly, either the single, combination, or entire assembly may be actuated to align with a treatment area, as needed. In some configurations, the farming machine 100 may align a treatment mechanism 120 with an identified object in the operating environment 102. That is, the farming machine 100 may identify an object in the operating environment 102 and actuate the treatment mechanism 120 such that its treatment area aligns with the identified object.

A treatment mechanism 120 may be operable between a standby mode and a treatment mode. In the standby mode the treatment mechanism 120 does not apply a treatment, and in the treatment mode the treatment mechanism 120 is controlled by the control system 130 to apply the treatment. However, the treatment mechanism 120 can be operable in any other suitable number of operation modes.

### Control system(s)

The farming machine 100 includes a control system 130. The control system 130 controls operation of the various components and systems on the farming machine 100. For instance, the control system 130 can obtain information about the operating environment 102, processes that information to identify a farming action to implement (e.g., via a plant treatment model), and implement the identified farming action with system components of the farming machine 100.

The control system 130 can receive information from the detection mechanism 110, the verification mechanism 150, the treatment mechanism 120, and/or any other component or system of the farming machine 100. For example, the control system 130 may receive measurements from the detection mechanism 110 or verification mechanism 150, or information relating to the state of a treatment mechanism 120 or implemented farming actions from a verification mechanism 150. Other information is also possible.

Similarly, the control system 130 can provide input to the detection mechanism 110, the verification mechanism 150, and/or the treatment mechanism 120. For instance, the control system 130 may be configured input and control operating parameters of the farming machine 100 (e.g., speed, direction). Similarly, the control system 130 may be configured to input and control operating parameters of the detection mechanism 110 and/or verification mechanism 150. Operating parameters of the detection mechanism 110 and/or verification mechanism 150 may include processing time, location and/or angle of the detection mechanism 110, image capture intervals, image capture settings, etc. Other inputs are also possible. Finally, the control system may be configured to generate machine inputs for the treatment mechanism 120. That is, translating a farming action of a treatment plan into machine instructions implementable by the treatment mechanism 120.

The control system 130 can be operated by a user operating the farming machine 100, wholly or partially autonomously, operated by a user connected to the farming machine 100 by a network, or any combination of the above. For instance, the control system 130 may be operated by an agricultural manager sitting in a cabin of the farming machine 100, or the control system 130 may be operated by an agricultural manager connected to the control system 130 via a wireless network. In another example, the control system 130 may implement an array of control algorithms, machine vision algorithms, decision algorithms, etc. that allow it to operate autonomously or partially autonomously.

The control system 130 may be implemented by a computer or a system of distributed computers. The computers may be connected in various network environments. For example, the control system 130 may be a series of computers implemented on the farming machine 100 and connected by a local area network. In another example, the control system 130 may be a series of computers implemented on the farming machine 100, in the cloud, a client device and connected by a wireless area network.

The control system 130 can apply one or more computer models to determine and implement farming actions in the field 160. For example, the control system 130 can apply a plant treatment model to images acquired by the detection mechanism 110 to determine and implement farming actions. The control system 130 may be coupled to the farming machine 100 such that an operator (e.g., a driver) can interact with the control system 130. In other embodiments, the control system 130 is physically removed from the farming machine 100 and communicates with system components (e.g., detection mechanism 110, treatment mechanism 120, etc.) wirelessly.

In some configurations, the farming machine 100 may additionally include a communication apparatus, which functions to communicate (e.g., send and/or receive) data between the control system 130 and a set of remote devices. The communication apparatus can be a Wi-Fi communication system, a cellular communication system, a short-range communication system (e.g., Bluetooth, NFC, etc.), or any other suitable communication system.

### Other Machine Components

In various configurations, the farming machine 100 may include any number of additional components.

For instance, the farming machine 100 may include a mounting mechanism 140. The mounting mechanism 140 provides a mounting point for the components of the farming machine 100. That is, the mounting mechanism 140 may be a chassis or frame to which components of the farming machine 100 may be attached but could alternatively be any other suitable mounting mechanism 140. More generally, the mounting mechanism 140 statically retains and mechanically supports the positions of the detection mechanism 110, the treatment mechanism 120, and the verification mechanism 150. In an example configuration, the mounting mechanism 140 extends outward from a body of the farming machine 100 such that the mounting mechanism 140 is approximately perpendicular to the direction of travel 115. In some configurations, the mounting mechanism 140 may include an array of treatment mechanisms 120 positioned laterally along the mounting mechanism 140. In some configurations, the farming machine 100 may not include a mounting mechanism 140, the mounting mechanism 140 may be alternatively positioned, or the mounting mechanism 140 may be incorporated into any other component of the farming machine 100.

The farming machine 100 may include locomoting mechanisms. The locomoting mechanisms may include any number of wheels, continuous treads, articulating legs, or some other locomoting mechanism(s). For instance, the farming machine 100 may include a first set and a second set of coaxial wheels, or a first set and a second set of continuous treads. In the either example, the rotational axis of the first and second set of wheels/treads are approximately parallel. Further, each set is arranged along opposing sides of the farming machine 100. Typically, the locomoting mechanisms are attached to a drive mechanism that causes the locomoting mechanisms to translate the farming machine 100 through the operating environment 102. For instance, the farming machine 100 may include a drive train for rotating wheels or treads. In different configurations, the farming machine 100 may include any other suitable number or combination of locomoting mechanisms and drive mechanisms.

The farming machine 100 may also include one or more coupling mechanisms 142 (e.g., a hitch). The coupling mechanism 142 functions to removably or statically couple various components of the farming machine 100. For example, a coupling mechanism may attach a drive mechanism to a secondary component such that the secondary component is pulled behind the farming machine 100. In another example, a coupling mechanism may couple one or more treatment mechanisms 120 to the farming machine 100.

The farming machine 100 may additionally include a power source, which functions to power the system components, including the detection mechanism 110, control system 130, and treatment mechanism 120. The power source can be mounted to the mounting mechanism 140, can be removably coupled to the mounting mechanism 140, or can be incorporated into another system component (e.g., located on the drive mechanism). The power source can be a rechargeable power source (e.g., a set of rechargeable batteries), an energy harvesting power source (e.g., a solar system), a fuel consuming power source (e.g., a set of fuel cells or an internal combustion system), or any other suitable power source. In other configurations, the power source can be incorporated into any other component of the farming machine 100.

### III.B System Environment

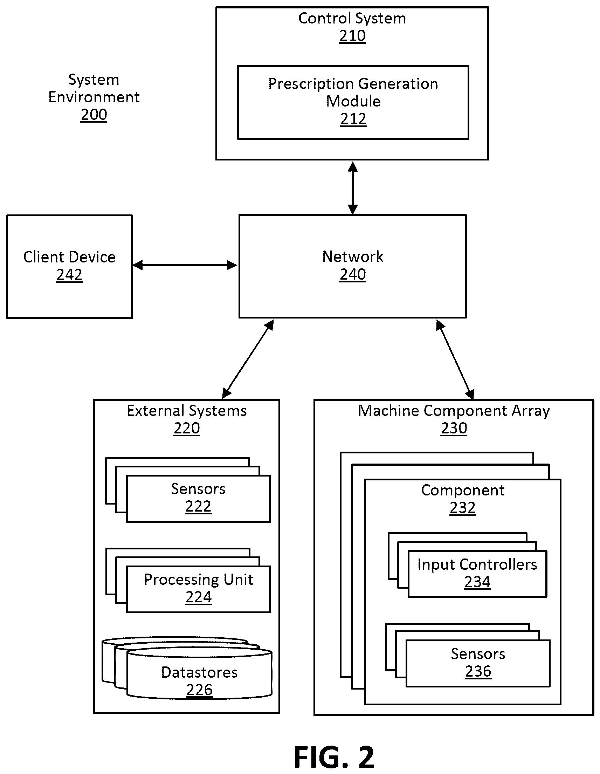

FIG. 2 is a block diagram of the system environment for the farming machine 100, in accordance with one or more example embodiments. In this example, the control system 210 (e.g., control system 130) is connected to external systems 220, a machine component array 230, and a client device 242 via a network 240 within the system environment 200.

The external systems 220 are any system that can generate data representing information useful for determining and implementing farming actions in a field. External systems 220 may include one or more sensors 222, one or more processing units 224, and one or more datastores 226. The one or more sensors 222 can measure the field 160, the operating environment 102, the farming machine 100, etc. and generate data representing those measurements. For instance, the sensors 222 may include a rainfall sensor, a wind sensor, heat sensor, a camera, etc. The processing units 2240 may process measured data to provide additional information that may aid in determining and implementing farming actions in the field. For instance, a processing unit 224 may access an image of a field 160 and calculate a weed pressure from the image or may access historical weather information for a field 160 to generate a forecast for the field. Datastores 226 store historical information regarding the farming machine 100, the operating environment 102, the field 160, etc. that may be beneficial in determining and implementing farming actions in the field. For instance, the datastore 226 may store results of previously implemented treatment plans and farming actions for a field 160, a nearby field, and or the region. The historical information may have been obtained from one or more farming machines (i.e., measuring the result of a farming action from a first farming machine with the sensors of a second farming machine). Further, the datastore 226 may store results of specific farming actions in the field 160, or results of farming actions taken in nearby fields having similar characteristics. The datastore 226 may also store historical weather, flooding, field use, planted crops, etc. for the field and the surrounding area. Finally, the datastores 226 may store any information measured by other components in the system environment 200.

The machine component array 230 includes one or more components 232. Components 232 are elements of the farming machine 100 that can take farming actions (e.g., a treatment mechanism 120). As illustrated, each component has one or more input controllers 234 and one or more sensors 236, but a component may include only sensors 236 or only input controllers 234. An input controller 234 controls the function of the component 232. For example, an input controller 234 may receive machine commands via the network 240 and actuate the component 230 in response. A sensor 236 generates data representing measurements of the operating environment 102 and provides that data to other systems and components within the system environment 200. The measurements may be of a component 232, the farming machine 100, the operating environment 102, etc. For example, a sensor 236 may measure a configuration or state of the component 232 (e.g., a setting, parameter, power load, etc.), measure conditions in the operating environment 102 (e.g., moisture, temperature, etc.), capture information representing the operating environment 102 (e.g., images, depth information, distance information), and generate data representing the measurement(s).

The control system 210 receives information from external systems 220 and the machine component array 230 and implements a treatment plan in a field with a farming machine. In implementing the treatment plan, the control system may use a prescription generation module to generate a machine state prescription ("state prescription") for the farming machined based on the farming objective. The prescription generation module 212 is described in greater detail below.

The client device 242 is one or more computing devices capable of receiving user input as well as transmitting and/or receiving data via the network 240. In one embodiment, a client device 242 is a conventional computer system, such as a desktop or a laptop computer. Alternatively, a client device 242 may be a device having computer functionality, such as a personal digital assistant (PDA), a mobile telephone, a smartphone, or another suitable device. A client device 242 is configured to communicate via the network 240. In one embodiment, a client device 242 executes an application allowing a user of the client device 242 to interact with the control system 210. For example, a client device 242 executes a browser application to enable interaction between the client device 242 and the control system 210 via the network 240. In another embodiment, a client device 242 interacts with the control system 210 through an application programming interface (API) running on a native operating system of the client device 242, such as IOS^{®} or ANDROID^{™}.

The network 250 connects nodes of the system environment 200 to allow microcontrollers and devices to communicate with each other. In some embodiments, the components are connected within the network as a Controller Area Network (CAN). In this case, within the network each element has an input and output connection, and the network 250 can translate information between the various elements. For example, the network 250 receives input information from the external systems 220 array and component array 230, processes the information, and transmits the information to the control system 210. The control system 210 generates a farming action based on the information and transmits instructions to implement the farming action to the appropriate component(s) 232 of the component array 230.

Additionally, the system environment 200 may be other types of network environments and include other networks, or a combination of network environments with several networks. For example, the system environment 200, can be a network such as the Internet, a LAN, a MAN, a WAN, a mobile wired or wireless network, a private network, a virtual private network, a direct communication line, and the like. In some embodiments, the network 240 may comprise any combination of local area and/or wide area networks, using both wired and/or wireless communication systems. In one embodiment, the network 240 uses standard communications technologies and/or protocols.

### IV. PRESCRIPTION GENERATION MODULE

The prescription generation module 212 generates a state prescription for a farming machine based on an objective of the farming machine (and/or input from a manager or operator). A state prescription is a series of mechanism states that the farming machine (e.g., farming machine 100) may implement as it travels through the field (e.g., field 160) performing various tasks. A mechanism state is a state of the farming machine 100 configured to enable and address functionality for agricultural tasks associated with the farming objective. Those tasks may include, e.g., planting, harvesting, tilling, or spraying. In turn, the mechanism states reflect the various machine operations, configurations, and parameters used to complete the farming tasks associated with a farming mechanism. As a simple example, a state prescription could be a series of gears and gear changes for a motor (e.g., different mechanism states) as a farming machine travels through a field implementing farming tasks. So, the farming machine could be traveling in first or second gear as it travels through the field applying plant treatments in difficult terrain, and it could be traveling in third or fourth gear as it travels between field sections. Additional example mechanism states are given below.

The various mechanisms and mechanism states of the farming machine may be configured and/or controlled to optimize the farming objective based on cost, speed, energy, yield, environmental efficiency, fuel usage and/or efficiency (which may affect costs), engine hours and/or efficiency (which may affect costs), machine or component degradation (e.g., "wear and tear"), etc. (e.g., by controlling their mechanism state). To illustrate, by continuing the example above, if the farming machine is configured for optimizing harvest speed, then the prescription generation module 212 determines various machine states (e.g., gear changes) of the farming machine to efficiently traverse the field and harvest crops quickly. In another example, if the farming machine is configured to optimize for environmental efficiency, then the prescription generation module 212 determines various machine states (e.g., gear changes) of the farming machine to traverse the field in a manner that conserves fuel.

This functionality is converse to traditional farming practices. That is, historically, users of a farming machine manually determine machine states of a farming machine. For instance, continuing the example above, a user would manually change gears as they travel through the field. Moreover, those users determine in real-time when and how to configure the various machine states of the farming machine to optimize for a farming objective. So, in our example, a user of the farming machine is determining how to "change gears to harvest quickly" or "change gears to reduce fuel costs" in real-time. In other words, those users of the farming machine manually generate their own state prescriptions on the fly, and, oftentimes, those state prescriptions are inefficient or not as efficient as they could be. To compound this problem, traditional farming machines lack the technological infrastructure (e.g., sensor systems and computational power) to generate optimized state prescriptions that efficiently optimize farming tasks for a farming objective in real-time.

To address this problem, the farming machine includes a prescription generation module 212 that generates state prescriptions for accomplishing the farming objective. The prescription generation module 212 identifies interaction points to perform the farming actions in a treatment plan and generates a state prescription that optimizes the machine states at those interaction points. An interaction point, or a point of interest, is a real-world location in the environment (e.g., environment 102) at which the farming machine may perform a farming action (e.g., a point where the farming machine needs to dig, a point where a farming machine turns, a point where a farming machine changes gear, etc.). Additionally, the prescription generation module 212 may generate a state prescription that optimizes (or improves) the implementation of the farming objective. In some examples, improving implementation may include creating or modifying paths, changing or modifying machine states, etc. Typically, the prescription generation module 212 generates and optimizes the state prescription using the various interaction points. Identifying interaction points and optimizing machine states are described in greater detail below.

FIG. 3 illustrates the prescription generation module 212, in accordance with one or more example embodiments. The prescription generation module 212 generates a state prescription for a farming machine. The prescription generation module 212 includes a point identification model 310 and an optimization model 320. The prescription generation module 212 may have additional or fewer elements and/or functionality of those elements may be provided in a different manner than provided in the description herein. For example, the functionality of the prescription generation module 212 may be implemented as a single model (e.g., a prescription generation model) or as one or more models.

The prescription generation module 212 applies the point identification model 310 to data describing the environment surrounding the farming machine to identify interaction points. In an example, the point identification model 310 utilizes traditional image recognition models such as a pixel-by-pixel image classification model to identify various features in the field based on a received set of images. The identified features are those that may be useful for determining interaction points (e.g., obstructions, plants, open ground, etc.). The point identification model 310 may create a map of the field reflecting those features.

The point identification model 310 identifies interaction points in the field based on the identified features. Each interaction point may be associated with a position of an identified feature in the field. For example, an identified interaction point may be the position of a large rock in a field because it may be necessary for the farming machine to change its machine state to avoid the rock (e.g., steer slowly around the rock). Additionally, each interaction point may be associated with metadata associated with the feature located at the interaction point. For example, if the interaction point is a plant, the interaction point may include metadata describing, e.g., the species of the plant, the type of treatment necessary for the plant, etc.

In some configurations, rather than the point identification model 310 identifying features in images and determining interaction points from those identified features, the point identification model 310 may be trained to directly identify interaction points in the field. For example, one or more neural networks may be trained to identify interaction points in the field. In this manner, the point identification model 310 may be inherently (rather than explicitly) identifying features that indicate an interaction point in the field. In other configurations, the point identification model 310 may receive and/or access interaction points (e.g., from client device 242 as a path, a feature map, or an interaction point map).

The optimization model 320 optimizes machine states in a state prescription at interaction points to accomplish a farming objective. For example, the point identification model 310 may identify a series of interaction points as treatment positions for plants identified in the field. Each of the interaction points identifies the plant as a weed or crop, and the treatment necessary to treat that plant. The optimization model 320 may then generate a series of instructions that modify the locomotion mechanism state (e.g., change the speed) of the farming machine to appropriately treat the plants at the interaction points. For instance, the farming machine may modify the speed of the farming machine to appropriately treat a crop at the interaction point associated with the crop and modify the speed of the farming machine to appropriately treat a weed at the interaction point associated with the weed.

To determine an optimal machine state at each interaction point, the optimization module calculates one or more objective scores at each interaction point. An objective score quantifies, for each possible machine state, a degree to which the machine state advances or adheres to the farming objective. For instance, returning to our gear-based example, consider a farming machine having a farming objective to "harvest the field quickly." In this example, the optimization model 320 calculates, for example, an objective score for each gear of the locomotion mechanism at each interaction point in the field (e.g., plants to harvest). So, for a given plant, the objective score quantifies which gear setting of the locomotion mechanism is best suited to "harvest the field quickly."

On the other hand, consider a farming objective of "reducing operating costs" of the farming machine. In this case, the optimization model 320 calculates, for example, an objective score for each gear of the locomotion mechanism that reduces the operating costs of the farming machine (e.g., fuel consumption, fuel efficiency, etc.). In making these calculations, the optimization model 320 may calculate objective scores based on various factors such as features or conditions in the environment, measurements from external systems 220, measurements from the machine component array 230, and information from the client device 242.

In some configurations, the objective score may also quantify whether performing a farming action at an interaction point advances the farming objective or retards the farming objective at that interaction point. To illustrate, consider an example where the point identification model 310 identifies an interaction point representing a significant obstacle in the path of the farming machine. In this case, the objective score for the farming machine may indicate that the locomotion mechanism should either idle or stop (rather than change gears) to avoid collisions with this obstacle. As the objective scores indicate idle or stop, the objective score may also indicate that the farming machine should "turn left" to avoid the obstacle at this interaction point or a previous interaction point. In this way, the farming machine may wholly avoid the interaction point representing the obstacle if it is the best solution to optimizing machine states in the field according to the farming objective.

Additionally, the optimization model 320 may optimize machine states along the path of the farming machine. To expand, the farming machine may access, receive, or determine a path to perform farming actions to accomplish a farming objective. The path, in some configurations, is a sequenced series of interaction points in the field. The farming machine travels along those sequenced interaction points performing the appropriate farming actions at each interaction point to accomplish the farming objective. As such, the optimization model 320 may generate a state prescription that, in effect, optimizes the machine states of the farming machine as it travels the path in the field. Depending on the farming objective, the farming machine may change speeds, change locomotion mechanism states, modify the order of interaction points, change directions, etc. when generating the state prescription corresponding to a path.

Additionally, the optimization model 320 may optimize machine states for a path or a portion of a path. To expand, the farming machine may access, receive, or determine all of the various interaction points and generate a path for those points. Again, the path is therefore a sequenced series of interaction points in the field. In this case, rather than optimizing a machine state on a per-interaction point basis, the optimization model may generate a state prescription that optimizes for the path or portions of the path. That is, the optimization model may optimize the object score along all points of the path (or a portion of the path) to generation the state prescription. To do so, the optimization model may sum the objective score along the entire trajectory and maximize that sum. So, as an example, rather than changing states constantly at each plant (e.g., at each interaction point), the farming machine may select the best state for each row of plants, a portion of a field, etc.

The farming machine travels along those sequenced interaction points performing the appropriate farming actions at each interaction point to accomplish the farming objective. As such, the optimization model 320 may generate a state prescription that, in effect, optimizes the machine states of the farming machine as it travels the path in the field. Depending on the farming objective, the farming machine may change speeds, change locomotion mechanism states, modify the order of interaction points, change directions, etc. when generating the state prescription corresponding to a path.

In some cases, the interaction points along the path may be modified based on the output point identification model 310 as the farming machine travels the path. The point identification model 320 may identify additional plants, changed plant states, removed obstructions, missing plants, or any other location or feature that may induce a farming action, etc. as it travels through the field and correspondingly update the path and its interaction points. For example, the farming machine may identify an obstacle in the path, identify it as an interaction point, and generate or modify the state prescription to avoid that obstacle to accomplish its farming objective. Similarly, the farming machine may identify patches of wet ground in the environment, identify it as an interaction point, and generate or modify the state prescription to navigate the wet ground in a manner that optimizes fuel efficiency according to the farming objective. Of course, rather than optimizing a path by generating or modifying a machine prescription, the farming machine can generate a new path for a farming machine based on identified interaction points. In this case, the prescription generation module 212 may also generate a state prescription at a set of identified, sequenced interaction points that optimize the farming objective.

On par, the optimization model 320, seeks to generate a state prescription that optimizes machine states of the farming machine to accomplish the farming objective as it performs various farming actions in the field. To do so, the optimization model 320 inputs one or more of the interaction points, a path, environmental features, farming actions, treatment plans, etc., and generates an output that optimizes machine states and paths to accomplish the farming objective.

In some configurations, the optimization model 320 may access a previously executed path and state prescription and determine at which points improvements could have been made. To do so, the optimization model 320 may analyze, at each interaction point, the executed farming action and machine state, and the other possible farming actions and machine states to determine whether the executed action and state was the optimal action and state. In these situations, the optimization module 320 may provide a client device 242 with an accounting of how the farming machine could have modified its path and/or state prescription to better accomplish the farming objective.

Depending on the configuration, the optimization model may be a machine learning model configured to optimize machine states and paths at interaction points in the field, or some other optimization algorithm. Thus, when generating objective scores that are aggregated into a state prescription and/or path for a farming machine to accomplish a farming objective, the objective scores may indicate one or more of (1) a probability the interaction point will advance or retard the farming objective, (2) a probability a machine state will advance the farming objective, (3) a probability a series of interaction points will advance the farming objective, (4) a probability a state prescription will advance the farming objective, (5) a probability a farming action will advance the farming objective or any other metric or combination of metrics that may be used in optimizing machine states and paths to accomplish a farming objective.

In one or more embodiments, the control system 210 may interact with a client device 242 when generating a state prescription. For example, the client device 242 may provide a path, a farming objective, a set of interaction points, images of the environment (e.g., an obstacle), etc. to the prescription generation module 212 and the prescription generation module may generate a state prescription for the farming machine based on the received information. Additionally, the prescription generation module 212 may provide a state prescription to a client device and receive a confirmation to employ the state prescription in response. For example, the control system 210 may provide a state prescription defining the locomotion states of the farming machine along a path according to a received farming objective to the client device, and the client device may provide confirmation to engage in the state prescription. The client device, in some examples, may edit or modify one or more of the machine states, types of optimizations, interaction points, paths, etc. in the state prescription. Within this context, the control system 210 may allow for a client device 242 to create a visualization regarding various aspects of a state prescription. For instance, the client device 242 (or control system 210) may generate a visualization representing differences in state prescriptions for yield vs machine wear and tear, a visualization showing the various states on the route, etc.

### Example Machine States

A state prescription for a farming machine can include one or more locomotion mechanism states. A locomotion mechanism state defines the targeted output of the locomotion mechanism of the farming machine at an interaction point. As a high-level example, the locomotion mechanism state may include the various settings and parameters for the locomotion mechanism to control the speed, direction, and acceleration of the farming machine. For instance, the locomotion mechanism state may include an off state in which the locomotion mechanism is off, powered down, etc., a stop state in which the locomotion mechanism is disengaged, an idle state in which the locomotion mechanism is idled, and a drive state in which the locomotion mechanism is engaged. The drive state may include various "sub-states" that define the speed, acceleration, gear, etc. of the farming machine. Additionally, the locomotion mechanism state may include a left turn state, a right turn state, a straight state, etc., with each state describing the settings and parameters of the locomotion mechanism for it to turn left, turn right, and move straight.

A state prescription for a farming machine can include one or more treatment mechanism states. A treatment mechanism state defines the targeted output of the treatment mechanism of the farming machine at an interaction point. As a high-level example, the treatment mechanism state may include various settings and parameters for the treatment mechanism that control the position, engagement, fluidics, etc., of a treatment mechanism and its corresponding treatments on a farming machine. For instance, the treatment mechanism state may include an engaged state in which the treatment mechanism applies treatment and may include a disengaged state in which the treatment mechanism does not apply a treatment. As another example, the treatment mechanism state may define a height of the treatment mechanism relative to a plant or the substrate.

### VI. EXAMPLE IMPLEMENTATIONS

As described above, the prescription generation module 212 can autonomously generate state prescriptions before a farming machine enters a field, or while the farming machine travels the field depending on the circumstances. An example for each is provided below.

### Real-time State Prescriptions

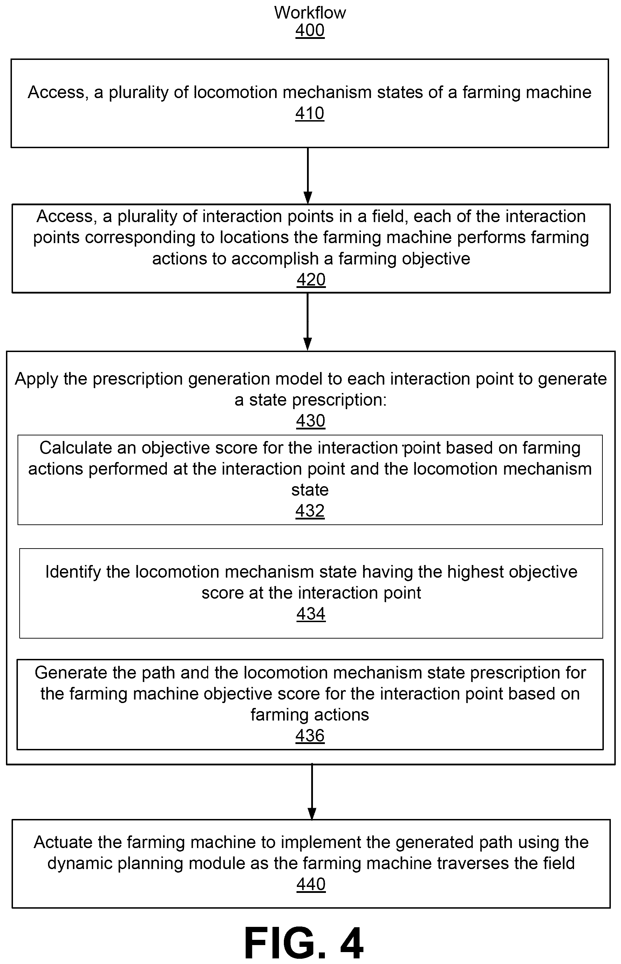

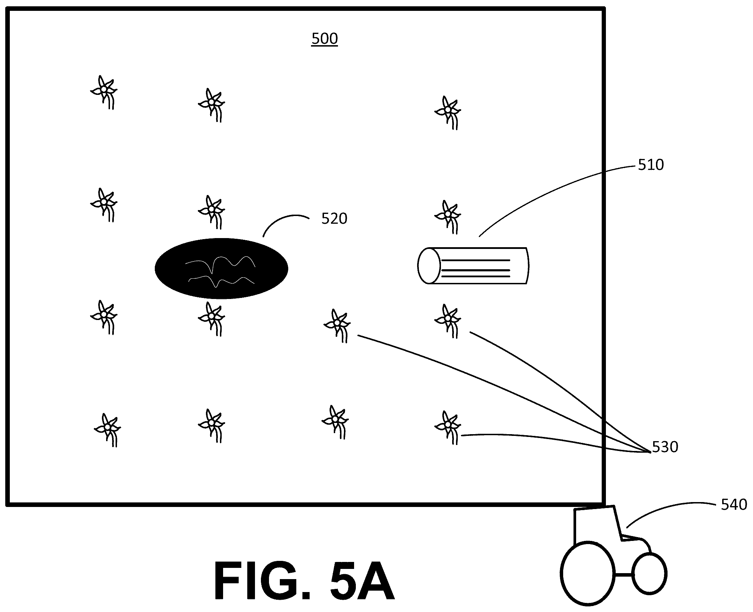

FIG. 4 illustrates a workflow diagram for generating a state prescription for a farming machine using a prescription generation module, in accordance with one or more example embodiments. The workflow 400 may include additional or fewer steps, and the workflow may be performed in a different order than illustrated. Moreover, one or more steps of the workflow may be repeated or omitted. Various steps of FIG. 4 are illustrated with reference to FIGs. 5A-5E as set forth below.

As described above, the prescription generation module 212 generates a state prescription for a farming machine by considering the desired farming objective (e.g., to maximize productivity, minimize resource usage, ensure cost-effectiveness, etc.). In this example, a farming machine is deployed in an agricultural field and is configured to optimize for cost-efficiency while harvesting plants a field (e.g., its farming objective). The farming machine autonomously regulates power output and locomotion mechanism states in a manner that attempts to achieve optimal performance for achieving the farming objective. Further, the prescription generation module 212 generates a path for the farming machine to traverse while implementing the state prescription to achieve the farming objective.

In FIG. 4, the prescription generation module 212 accesses 410 a plurality of locomotion mechanism states of a farming machine. The plurality of the locomotion mechanism states includes at least a stop state in which the locomotion mechanism of the farming machine is disengaged, an idle state in which the locomotion mechanism state is idled, and a drive state in which the locomotion mechanism is engaged. The drive locomotion mechanism state may include several "sub-states" defining one or more of the speed, direction, and acceleration at which the farming machine may travel while in the drive locomotion state.

FIG. 5A illustrates a farming machine in a field configured in one or more embodiments. FIG. 5A is a field wherein which a farming machine 540 follows a predetermined trajectory. The field 500 includes a set of plants 530 that a farming machine 540 is configured to perform a farming action on as part of its farming objective (e.g., harvesting plants in a cost-efficient manner). The field 500 includes rows of plants 530, a puddle 520, and a log 510. In FIG. 5A, the farming machine 540 accesses the locomotion states of stop, idle, and drive for the locomotion mechanism of the farming machine.

Returning to FIG. 4, the prescription generation module 212 identifies 420 (or accesses) a plurality of interaction points in a field. Each of the interaction points corresponds to a location the farming machine performs a farming action to accomplish a farming objective. For instance, each interaction point is where a plant could be harvested. Other farming actions at each interaction point are also possible, such as, for example, changing speeds, idling an engine, turning left or right, etc. In this example, the interaction points are identified and real-time and correspond to a path the farming machine autonomously travels through the field to harvest plants in view of the puddle 520 and log 510 in the field.

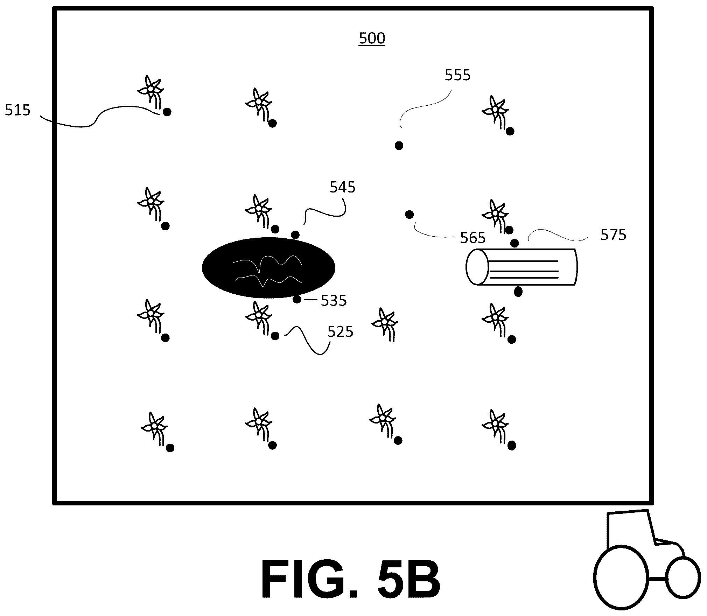

FIG. 5B illustrates the field with the accessed interaction points, according to an example embodiment. Each interaction point is visually indicated by a dot in the field 500. In FIG. 5B, as some examples, the interaction points 515 and 525 represent points at which the farming machine may harvest plants, interaction points 535 and 545 represent points at which the farming machine may interact with an obstacle (e.g., a puddle), interaction points 555 and 565 represent points at which the farming machine may change machine states because there is open field, and interaction point 575 represents a point where the farming machine interacts with another obstacle (e.g., a log). Each of these interaction points are locations in the field where the locomotion state of the farming machine may perform a farming action, and where the locomotion state may be changed, to achieve or advance the farming objective. Other interaction points are possible in the field and may not be labeled for ease of understanding.

Returning to FIG. 4, the control system applies 430 the prescription generation module to generate a state prescription for the farming machine based on the interaction points. To do so, for each interaction point, the module calculates 432 an objective score for the interaction point based on the farming objective and the farming action performed at that interaction point. As described above, an objective score is a quantitative measure that evaluates whether a farming action should be taken at the interaction point, and/or which locomotion state to apply at the interaction point to achieve the desired farming objective. The prescription generation module 212 calculates an objective score for each of the possible locomotion states at the interaction point for the various farming actions. The prescription generation module 212 identifies 434 the locomotion mechanism state with the highest objective score at the interaction point as the prescribed locomotion mechanism state.

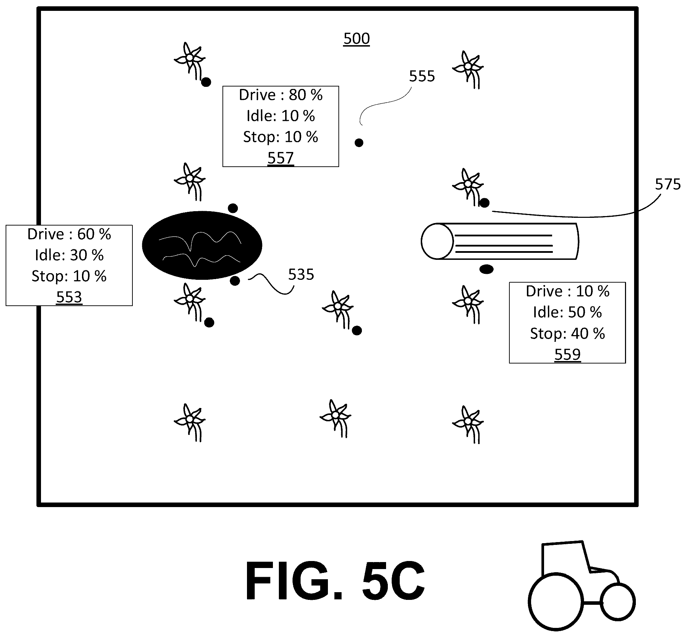

FIG. 5C illustrates the calculation of objective scores for the various locomotion states at each interaction point, according to an example embodiment. In the illustrated example, the objective score represents the probability that the locomotion state is best suited to achieve the farming objective at the indicated interaction point. In other words, the prescription generation module 212 calculates an objective score for each locomotion state of the accessed locomotion mechanism states at each interaction point, and those scores represent a probability that each state is the most likely state to optimize the farming objective.

Recall again that, in this example, the set of locomotion mechanism states include drive, idle, and stop. Thus, the prescription generation module 212 calculates an objective score for each of the locomotion states of drive, idle, and stop at each interaction point. As shown, the prescription generation module 212 may determine at the objective scores 553 for drive is 60% for idle is 30 %, and for stop is 10% at the interaction point 535. Similarly, the prescription generation module 212 determines an 80 % probability for driving, 10 % for idle, and 10 % for stopping at the interaction point 555, and a 10 % probability for driving, a 50 % probability for idling, and 40 % for stop at the interaction point 575.

At interaction point 535 the objective score for drive may indicate a mechanism state with a reduced speed to account for the puddle at that location. At interaction point 555, the objective score for drive may indicate a mechanism state with an increased speed to quickly travel to the next plant. At interaction point 575, the idle probability may indicate that the engine should idle until updated instructions can be received to account for the log obstacle. All of these calculations rest within the optimization processes described above.

Returning to FIG. 4, the module generates 436 the path and the locomotion mechanism state prescription for the path based on the interaction points and objective scores. The path includes one or more interaction points in the field. The path includes the interaction points that will cause the farming machine to accomplish its farming objective (e.g., harvest plants). The locomotion mechanism state prescription for the path includes the various locomotion mechanism states selected for each point in the path. Typically, the selected locomotion state prescription includes the locomotion states with the highest objective scores.

In some examples, the prescription generation module may generate (or modify) a path that includes all, some of, or none of the interaction points based on the farming objective. Generating this path may take into account objective scores configured for optimizing interaction points and machine states to accomplish the farming objective. For example, the generated path may be configured to avoid locomotion states such as "stop" or "idle" which would prevent the farming machine from accomplishing its farming objective. Alternatively, the generated path may intentionally introduce an idle state in situations where it is cost-effective for the locomotion mechanism to idle (e.g., elevated temperature causes reduced fuel efficiency).

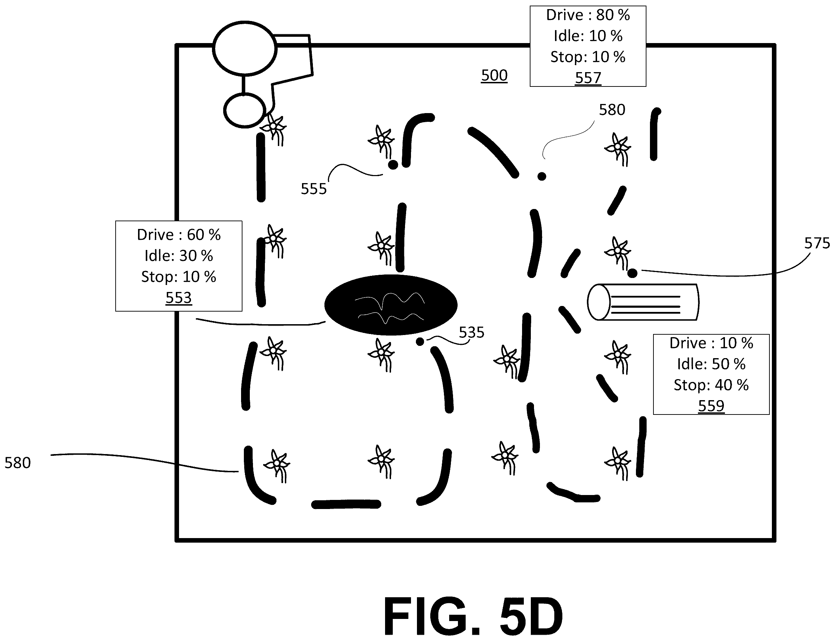

FIG. 5D illustrates the generation of a path and the state prescription, in accordance with one or more example embodiments. For a set of interaction points (as identified in FIG. 5B and 5C), the prescription generation module 212 determines the locomotion mechanism state with the highest objective score for the set of interaction points. The prescription generation module 212 generates, in real-time, the path 580 between those points in a manner that optimizes the farming objective. The path 580 corresponds to a machine-state prescription for each of the interaction points. The machine state prescription includes the determined locomotion mechanism states having the highest objective scores at those interaction points. The dotted lines indicate the predetermined path 580 of the farming machine with a set of determined locomotion mechanism state for the interaction points.

Returning to FIG. 4, farming actuates 440 the farming machine to implement the generated path using the machine states of the machine state prescription.

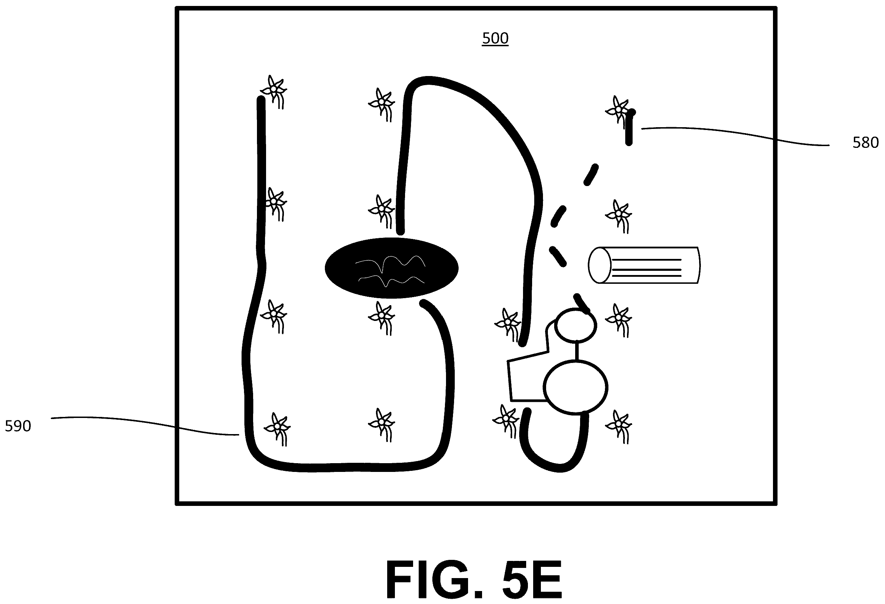

For instance, FIG. 5E illustrates the farming machine following the predetermined path 590 from the prescription generation module 212, in accordance with one or more example embodiments.

### Predetermined State Prescriptions

In another embodiment, the prescription generation module 212 generates a state prescription before a farming machine traverses a path in a field. The prescription generation module 212 determines a locomotion mechanism state for a set of identified interaction points along a path to advance the arming objective.

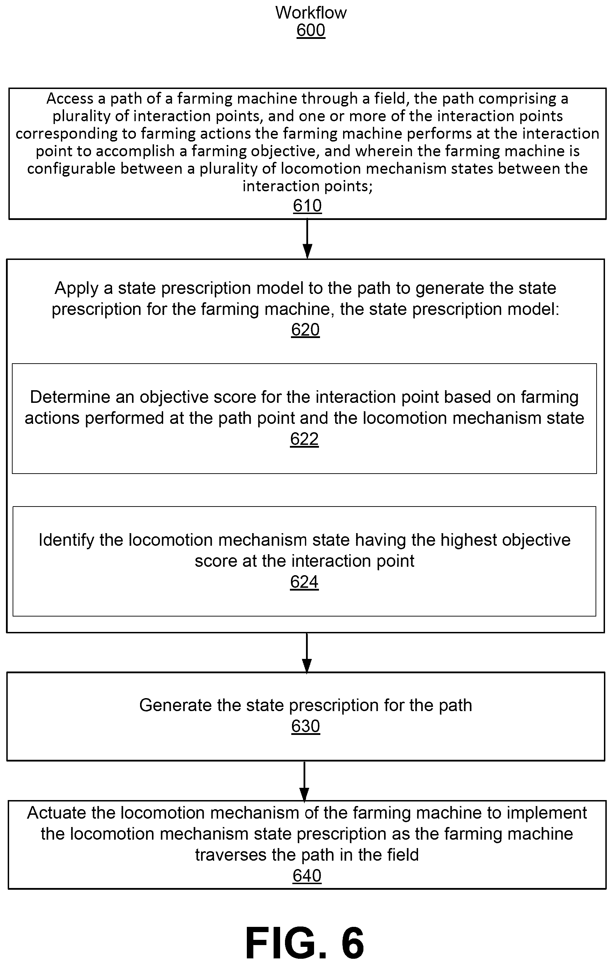

FIG. 6 illustrates a workflow diagram for generating a state prescription for a farming machine using a prescription generation module, in accordance with one or more example embodiments. The workflow 600 may include additional or fewer steps, and the workflow may be performed in a different order than illustrated. Moreover, one or more steps of the workflow may be repeated or omitted. Various steps of FIG. 6 are illustrated with reference to FIGs. 5A-5E as set forth below.

Similar to the example in FIG. 4, a farming machine is configured to perform various farming actions in a field to accomplish a farming objective. In this example, the farming objective is for the farming machine to apply treatments to plants in the field in a manner that increases profit per acre in the field. The treatments may either promote the growth of crops or regulate the growth of weeds. The farming machine includes a locomotion mechanism configured to operate between drive, idle, and stop states, and the drive state has sub-states that control direction, speed (velocity), and acceleration.

The farming machine accesses 610 a path of the farming machine through the field. The path of the farming machine is one configured to allow the farming machine to treat the various plants in the field. In this example, the path is predetermined and includes a typical set of passes through the field along the rows of crops.

The path includes a series of interaction points. The series of interaction points are where the farming machine performs farming actions in the field. So, in this example, the interaction points include, for example, the expected and/or identified position of each crop for treatment, the identified positions of each weed for treatment, the positions where the farming machine turns, etc. In aggregate, the interaction points are configured for the farming machine to accomplish the farming objective.

The farming machine applies 620 a state prescription model to the path to generate a state prescription for the farming machine.

To do so, the farming machine calculates 622 an objective score for each interaction point. The calculated objective score takes into account the various farming actions that may take place at the interaction point, and the various locomotion mechanism states that may be used to perform that farming action. So, an objective score may give a probability that a specific speed of one or more speeds should be implemented when treating a plant, or a probability that an engine should be idled or stopped at the end of a pass, etc.

The farming machine identifies 624 the locomotion mechanism state having the highest objective score at each interaction point as the prescribed locomotion mechanism state. So, continuing our previous example, the locomotion mechanism state may be the speed best suited to treat a crop in the field, or to stop the engine at the end of a pass according to the farming objective.

The farming machine generates 630 a state prescription for the path. The state prescription assigns each interaction point on the path its corresponding prescribed locomotion mechanism state.

The farming machine actuates the locomotion mechanism of the farming machine to implement the locomotion mechanism state prescription as the farming machine traverses the path in the field.

### Additional Examples

In some examples, as described above, the state prescription may be generated or updated in real-time based on interaction points identified in real-time in the field. For example, the state prescription may be updated to account for an obstacle identified in the field that was not there previously. In this case, the state prescription may include setting the locomotion mechanism state to idle or off while the farming machine diagnoses the best method to account for the obstacle. To illustrate, the farming machine may transmit images of the obstacle to a client device 242 or some other external system to generate a set of actions to avoid the obstacle. The client device 242 may transmit a state prescription to the farming machine to implement to avoid the obstacle (e.g., instructions and machines states to proceed as normal, turn around, turn to avoid, etc.).

In another example, the state prescription may adhere to logical progressions based on context in the environment and/or predefined situations. As an example, the state prescription may include a set of machine states to implement when travelling through an extended open field without other actions or may have a set of machines states to implement when approaching other machines or fields. As another example, the farming machine may be configured to move from drive to idle in specific situations (at particular signages, etc.) or from idle to stop in certain situations (after particular periods of time in idle, etc.).

Additionally, in an example, the locomotion mechanism state may be different than other states of the machine. For example, the locomotion mechanism state may be an idle state, while a battery state may be an on state.

Additionally, in an example, the prescription generation module 212 may generate state prescriptions configured to "test" or "experiment" with various machine parameters to determine which locomotion states correspond to what improvements. For example, the prescription generation module 212 may generate a state prescription that evaluates engine efficiency at various engine states in a field or various field conditions.

Additionally, in an example, the prescription generation module 212 may generate state prescriptions that coordinate between one or more vehicles. In other words, the optimization problems for locomotion state can consider one, two, three, etc. autonomous or semi-autonomous machines in the field. For instance, one machine may be idled, while another machine is in drive to accomplish the task. As another illustration, one machine may tender (e.g., refuel, refill tanks, seeds, etc.) on the side of the field by idling or stopping the engine state, while other machines may be in a drive or operation locomotion state in the field. While idled, the farming machine may upload data to one or more network systems via the network. As another illustration, the state prescription for a harvester and one or more grain carts can be coordinated and optimized as described hereinabove.

### Additional Operational Contexts

For ease of understanding, the description of a control system 210 employ a prescription generation module 212 to generate a state prescription that governs a locomotion state of a locomotion mechanism centered on a farming machine operating in a field.

Notably, however, generating a state prescription is not limited to paths an actions that occur within a field. That is, more generally, a prescription generation module can be configured to generate a state prescription for an autonomous farming machine within the operating environment of that autonomous farming machine. For example, the state prescription can govern operation in areas near a field, roads near a field, structures on or near the farm, etc. To illustrate, a prescription generation module 212 may generate a state prescription for a farming machine to leave a storage structure, travel to a field, perform farming operations, travel to a tendering station next to the field (e.g., in the operating environment, but outside the field), perform additional or different farming operations, travel to the storage structure, and enter the storage structure.

Similarly, a control system controlling engine state is more broadly applicable to additional types of machines. For example, a control system may generate a state prescription for an autonomous construction machine to perform various construction tasks in a construction-based operating environment. Other operating environments may include automated forestry, warehouses, maritime, healthcare, etc. systems.

### V. CONTROL SYSTEM

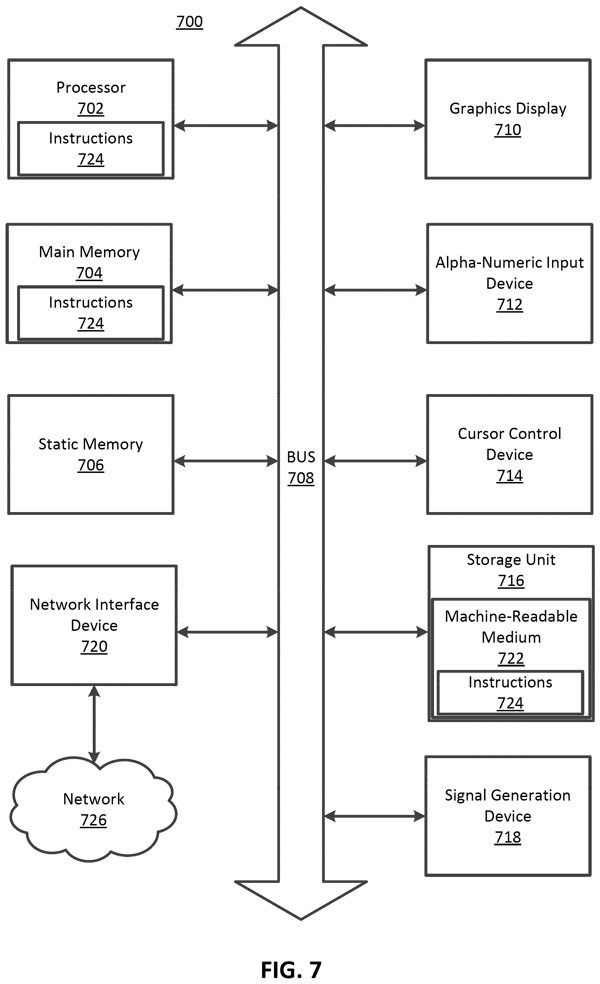

FIG. 7 is a block diagram illustrating components of an example machine for reading and executing instructions from a machine-readable medium. Specifically, FIG. 6 shows a diagrammatic representation of control system 130 in the example form of a computer system 700. The computer system 700 can be used to execute instructions 724 (e.g., program code or software) for causing the machine to perform any one or more of the methodologies (or processes) described herein. In alternative embodiments, the machine operates as a standalone device or a connected (e.g., networked) device that connects to other machines. In a networked deployment, the machine may operate in the capacity of a server machine or a client machine in a server-client network environment, or as a peer machine in a peer-to-peer (or distributed) network environment.

The machine may be a server computer, a client computer, a personal computer (PC), a tablet PC, a set-top box (STB), a smartphone, an internet of things (IoT) appliance, a network router, switch or bridge, or any machine capable of executing instructions 724 (sequential or otherwise) that specify actions to be taken by that machine. Further, while only a single machine is illustrated, the term "machine" shall also be taken to include any collection of machines that individually or jointly execute instructions 724 to perform any one or more of the methodologies discussed herein.

The example computer system 700 includes one or more processing units (generally processor 702). The processor 702 is, for example, one or more central processing units (CPUs), one or more graphics processing units (GPUs), one or more digital signal processors (DSPs), one or more controllers, one or more state machines, one or more application specific integrated circuits (ASICs), one or more radio-frequency integrated circuits (RFICs), or any combination of these. The computer system 700 also includes a main memory 704. The computer system may include a storage unit 716. The processor 702, memory 704, and the storage unit 716 communicate via a bus 708.

In addition, the computer system 700 can include a static memory 706, a graphics display 710 (e.g., to drive a plasma display panel (PDP), a liquid crystal display (LCD), or a projector). The computer system 700 may also include alphanumeric input device 712 (e.g., a keyboard), a cursor control device 714 (e.g., a mouse, a trackball, a joystick, a motion sensor, or other pointing instrument), a signal generation device 718 (e.g., a speaker), and a network interface device 720, which also are configured to communicate via the bus 708.

The storage unit 716 includes a machine-readable medium 722 on which is stored instructions 724 (e.g., software) embodying any one or more of the methodologies or functions described herein. For example, the instructions 724 may include the functionalities of modules of the system 130 described in FIG. 2. The instructions 724 may also reside, completely or at least partially, within the main memory 704 or within the processor 702 (e.g., within a processor's cache memory) during execution thereof by the computer system 700, the main memory 704 and the processor 702 also constituting machine-readable media. The instructions 724 may be transmitted or received over a network 726 (e.g., network 240) via the network interface device 720.

### VI. ADDITIONAL CONSIDERATIONS

In the description above, for purposes of explanation, numerous specific details are set forth in order to provide a thorough understanding of the illustrated system and its operations. It will be apparent, however, to one skilled in the art that the system can be operated without these specific details. In other instances, structures and devices are shown in block diagram form in order to avoid obscuring the system.

Reference in the specification to "one embodiment" or "an embodiment" means that a particular feature, structure, or characteristic described in connection with the embodiment is included in at least one embodiment of the system. The appearances of the phrase "in one embodiment" in various places in the specification are not necessarily all referring to the same embodiment.

Some portions of the detailed descriptions are presented in terms of algorithms or models and symbolic representations of operations on data bits within a computer memory. An algorithm is here, and generally, conceived to be steps leading to a desired result. The steps are those requiring physical transformations or manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like. Furthermore, it has also proven convenient at times, to refer to arrangements of operations as modules, without loss of generality. The described operations and their associated modules may be embodied in software, firmware, hardware, or any combinations thereof.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Some of the operations described herein are performed by a computer. This computer may be specially constructed for the required purposes, or it may comprise a general-purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs), EPROMs, EEPROMs, magnetic or optical cards, or any type of non-transitory computer readable storage medium suitable for storing electronic instructions.

The figures and the description above relate to various embodiments by way of illustration only. It should be noted that from the following discussion, alternative embodiments of the structures and methods disclosed herein will be readily recognized as viable alternatives that may be employed without departing from the principles of what is claimed.

One or more embodiments have been described above, examples of which are illustrated in the accompanying figures. It is noted that wherever practicable similar or like reference numbers may be used in the figures and may indicate similar or like functionality. The figures depict embodiments of the disclosed system (or method) for purposes of illustration only. One skilled in the art will readily recognize from the following description that alternative embodiments of the structures and methods illustrated herein may be employed without departing from the principles described herein.

Some embodiments may be described using the expression "coupled" and "connected" along with their derivatives. It should be understood that these terms are not intended as synonyms for each other. For example, some embodiments may be described using the term "connected" to indicate that two or more elements are in direct physical or electrical contact with each other. In another example, some embodiments may be described using the term "coupled" to indicate that two or more elements are in direct physical or electrical contact. The term "coupled," however, may also mean that two or more elements are not in direct physical or electrical contact with each other, but yet still co-operate or interact with each other. The embodiments are not limited in this context.

As used herein, the terms "comprises," "comprising," "includes," "including," "has," "having" or any other variation thereof, are intended to cover a non-exclusive inclusion. For example, a process, method, article or apparatus that comprises a list of elements is not necessarily limited to only those elements but may include other elements not expressly listed or inherent to such process, method, article or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B is true (or present).

In addition, use of "a" or "an" are employed to describe elements and components of the embodiments herein. This is done merely for convenience and to give a general sense of the system. This description should be read to include one or at least one and the singular also includes the plural unless it is obvious that it is meant otherwise.

Upon reading this disclosure, those of skill in the art will appreciate still additional alternative structural and functional designs. Thus, while particular embodiments and applications have been illustrated and described, it is to be understood that the disclosed embodiments are not limited to the precise construction and components disclosed herein. Various modifications, changes and variations, which will be apparent to those, skilled in the art, may be made in the arrangement, operation and details of the method and apparatus disclosed herein without departing from the spirit and scope defined in the appended claims.
Embodiments of the invention can be described with reference to the following numbered clauses, with preferred features laid out in dependent clauses:
1. A method determining a locomotion mechanism state prescription for an autonomous farming machine, the method comprising:
   accessing a path of a farming machine through an operating environment comprising a field, the path comprising a plurality of interaction points, and one or more of the interaction points corresponding to farming actions the farming machine performs at the interaction point to accomplish a farming objective, and wherein the farming machine is configurable between a plurality of locomotion mechanism states between the interaction points;
   applying a state prescription model to the path to generate the locomotion mechanism state prescription for the farming machine, the state prescription model: for each interaction point of the plurality of interaction points along the path,
      determining, for each of the plurality of locomotion mechanism states, an objective score for the interaction point based on farming actions performed at the point and the locomotion mechanism state; and
      identifying the locomotion mechanism state having a highest objective score at the point as a prescribed locomotion mechanism state for the interaction point;
   generating locomotion mechanism the state prescription for the path, the locomotion mechanism state prescription comprising the prescribed locomotion mechanism state for each interaction point of the plurality of interaction points on the path; and
   actuating the locomotion mechanism of the farming machine to implement the locomotion mechanism state prescription as the farming machine traverses the path in the field.
2. The method of clause 1, wherein the plurality of locomotion mechanism states comprises, at least:
   an off state in which the locomotion mechanism is turned off,
   a stop state in which a locomotion mechanism of the farming machine is disengaged,
   an idle state in which the locomotion mechanism of the farming machine is idled, and
   a drive state in which the locomotion mechanism of the farming machine is engaged.
3. The method of clause 2, wherein the drive state comprises a plurality of sub-states, each of the plurality of sub-states defining one or more of a velocity, a direction, and an acceleration implemented by the locomotion mechanism.
4. The method of any one of the preceding clauses, wherein calculating the objective score comprises:
   for each interaction point of the plurality of interaction points on the path:
   determining, for each locomotion mechanism state of the plurality, a probability that performing a farming action at the interaction point when the locomotion mechanism is in a locomotion mechanism state advances the farming objective.
5. The method of any one of the preceding clauses, wherein the farming objective comprises optimizing a performance of farming actions in the field for a time efficiency.
6. The method of any one of the preceding clauses, wherein the farming objective comprises optimizing a performance of farming actions at interaction points in the field for a cost efficiency.
7. The method of any one of the preceding clauses, wherein the farming objective comprises optimizing a performance of farming actions at interaction points in the environment outside the field.
8. A method determining a locomotion mechanism state prescription for an autonomous farming machine, the method comprising:
   accessing a plurality of locomotion mechanism states of a farming machine, the farming machine configurable between the plurality of locomotion mechanism states;
   identifying a plurality of interaction points in an operating environment comprising a field, each of the interaction points corresponding to locations in the field where the farming machine performs farming actions to accomplish a farming objective;
   applying a prescription generation model to the plurality of interaction points to generate a path for the farming machine in the field and a machine state prescription for the farming machine along the path, the prescription generation model :
      for each interaction point of the plurality of interaction points in the field, calculating, for each of the plurality of locomotion mechanism states, an objective score for the interaction point based on farming actions performed at the interaction point and the locomotion mechanism state;
      identifying the locomotion mechanism state having a highest objective score at the interaction point as a prescribed locomotion mechanism state for the interaction point; and
      generating the path and the locomotion mechanism state prescription for the farming machine, the path comprising one or more interaction points and the locomotion mechanism state prescription comprising the prescribed locomotion mechanism state for its corresponding interaction point; and
   actuating the locomotion mechanism of the farming machine to implement the path using the locomotion mechanism state prescription as the farming machine traverses the field.
9. The method of clause 8, wherein the plurality of locomotion mechanism states comprises, at least:
   an off state in which the locomotion mechanism is turned off,
   a stop state in which a locomotion mechanism of the farming machine is disengaged,
   an idle state in which the locomotion mechanism of the farming machine is idled, and
   a drive state in which the locomotion mechanism of the farming machine is engaged.
10. The method of clause 9, wherein the drive state comprises a plurality of sub-states, each of the plurality of sub-states defining one or more of a velocity, a direction, and an acceleration implemented by the locomotion mechanism.
11. The method of clause 10, wherein calculating the objective score comprises:
   for each interaction point of the plurality of interaction points on the path:
   determining, for each locomotion mechanism state of the plurality, a probability that performing a farming action at the interaction point when the locomotion mechanism is in a locomotion mechanism state advances the farming objective.
12. The method of any one of clauses 7 to 11, wherein the farming objective comprises optimizing a performance of farming actions in the field for a time efficiency.
13. The method of any one of clauses 7 to 11, wherein the farming objective comprises optimizing a performance of farming actions at interaction points in the field for a cost efficiency.
14. The method of any one of clauses 7 to 11, wherein the farming objective comprises optimizing a performance of farming actions at interaction points in the operating environment outside the field.
15. A farming machine comprising:
   a locomotion mechanism configured to propel the farming machine through an operating environment comprising a field when actuated, and wherein the locomotion mechanism is configurable between a plurality of locomotion mechanism states;
   an identification system configured to capture images of the field and identify interaction points in the field based on the images;
   a control system comprising one or more processors configured to generate a state prescription for the farming machine; and
   a non-transitory computer-readable storage medium comprising computer program instructions for generating the state prescription, the instructions, when actuated by the one or more processors, causing the one or more processors to:
      access a path of the farming machine through a field, the path comprising a plurality of interaction points identified by the identification system, and one or more of the interaction points corresponding to farming actions the farming machine performs at the interaction point to accomplish a farming objective;
      apply a state prescription model to the path to generate the state prescription for the farming machine, the state prescription model:
         for each interaction point of the plurality of interaction points along the path,
         determine, for each of the plurality of locomotion mechanism states, an objective score for the interaction point based on farming actions performed at the point and the locomotion mechanism state; and
         identify the locomotion mechanism state having a highest objective score at the point as a prescribed locomotion mechanism state for the interaction point;
      generate the state prescription for the path, the state prescription comprising the prescribed locomotion mechanism state for each interaction point of the plurality of interaction points on the path; and
      actuate the locomotion mechanism of the farming machine to implement the locomotion mechanism state prescription as the farming machine traverses the path in the field.
16. The farming machine of clause 15, wherein the plurality of locomotion mechanism states comprises, at least:
   an off state in which the locomotion mechanism is turned off,
   a stop state in which a locomotion mechanism of the farming machine is disengaged,
   an idle state in which the locomotion mechanism of the farming machine is idled, and
   a drive state in which the locomotion mechanism of the farming machine is engaged.
17. The farming machine of clause 15 or clause 16, wherein calculating the objective score comprises:
   for each interaction point of the plurality of interaction points on the path:
   determining, for each locomotion mechanism state of the plurality, a probability that performing a farming action at the interaction point when the locomotion mechanism is in a locomotion mechanism state advances the farming objective.
18. The farming machine of any one of clauses 15 to 17, wherein the farming objective comprises optimizing a performance of farming actions in the field for a time efficiency.
19. The farming machine of any one of clauses 15 to 17, wherein the farming objective comprises optimizing a performance of farming actions at interaction points in the field for a cost efficiency.
20. The farming machine of any one of clauses 15 to 17, wherein the farming objective comprises optimizing a performance of farming actions at interaction points in the operating environment outside of the field.

## Claims

1. A method determining a locomotion mechanism state prescription for an autonomous farming machine (100), the method comprising:
accessing (610) a path of a farming machine through an operating environment comprising a field, the path comprising a plurality of interaction points, and one or more of the interaction points corresponding to farming actions the farming machine performs at the interaction point to accomplish a farming objective, and wherein the farming machine is configurable between a plurality of locomotion mechanism states between the interaction points;
applying (620) a state prescription model to the path to generate the locomotion mechanism state prescription for the farming machine, the state prescription model:
for each interaction point of the plurality of interaction points along the path,
determining (622), for each of the plurality of locomotion mechanism states, an objective score for the interaction point based on farming actions performed at the point and the locomotion mechanism state; and
identifying (624) the locomotion mechanism state having a highest objective score at the point as a prescribed locomotion mechanism state for the interaction point;
generating (630) locomotion mechanism the state prescription for the path, the locomotion mechanism state prescription comprising the prescribed locomotion mechanism state for each interaction point of the plurality of interaction points on the path; and
actuating (640) the locomotion mechanism of the farming machine to implement the locomotion mechanism state prescription as the farming machine traverses the path in the field.

2. The method of claim 1, wherein the plurality of locomotion mechanism states comprises, at least:
an off state in which the locomotion mechanism is turned off,
a stop state in which a locomotion mechanism of the farming machine is disengaged,
an idle state in which the locomotion mechanism of the farming machine is idled, and
a drive state in which the locomotion mechanism of the farming machine is engaged.

3. The method of claim 2, wherein the drive state comprises a plurality of sub-states, each of the plurality of sub-states defining one or more of a velocity, a direction, and an acceleration implemented by the locomotion mechanism.

4. The method of any one of the preceding claims, wherein calculating the objective score comprises:
for each interaction point of the plurality of interaction points on the path:
determining, for each locomotion mechanism state of the plurality, a probability that performing a farming action at the interaction point when the locomotion mechanism is in a locomotion mechanism state advances the farming objective.

5. The method of any one of the preceding claims, wherein the farming objective comprises optimizing a performance of farming actions in the field for a time efficiency.

6. The method of any one of claims 1 to 4, wherein the farming objective comprises optimizing a performance of farming actions at interaction points in the field for a cost efficiency.

7. The method of any one of claims 1 to 4, wherein the farming objective comprises optimizing a performance of farming actions at interaction points in the environment outside the field.

8. A method determining a locomotion mechanism state prescription for an autonomous farming machine (100), the method comprising:
accessing (410) a plurality of locomotion mechanism states of a farming machine, the farming machine configurable between the plurality of locomotion mechanism states;
identifying (420) a plurality of interaction points in an operating environment comprising a field, each of the interaction points corresponding to locations in the field where the farming machine performs farming actions to accomplish a farming objective;
applying (430) a prescription generation model to the plurality of interaction points to generate a path for the farming machine in the field and a machine state prescription for the farming machine along the path, the prescription generation model :
for each interaction point of the plurality of interaction points in the field,
calculating (432), for each of the plurality of locomotion mechanism states, an objective score for the interaction point based on farming actions performed at the interaction point and the locomotion mechanism state;
identifying (434) the locomotion mechanism state having a highest objective score at the interaction point as a prescribed locomotion mechanism state for the interaction point; and
generating (436) the path and the locomotion mechanism state prescription for the farming machine, the path comprising one or more interaction points and the locomotion mechanism state prescription comprising the prescribed locomotion mechanism state for its corresponding interaction point; and
actuating (440) the locomotion mechanism of the farming machine to implement the path using the locomotion mechanism state prescription as the farming machine traverses the field.

9. The method of claim 8, wherein the plurality of locomotion mechanism states comprises, at least:
an off state in which the locomotion mechanism is turned off,
a stop state in which a locomotion mechanism of the farming machine is disengaged,
an idle state in which the locomotion mechanism of the farming machine is idled, and
a drive state in which the locomotion mechanism of the farming machine is engaged.

10. The method of claim 9, wherein the drive state comprises a plurality of sub-states, each of the plurality of sub-states defining one or more of a velocity, a direction, and an acceleration implemented by the locomotion mechanism.

11. The method of claim 10, wherein calculating the objective score comprises:
for each interaction point of the plurality of interaction points on the path:
determining, for each locomotion mechanism state of the plurality, a probability that performing a farming action at the interaction point when the locomotion mechanism is in a locomotion mechanism state advances the farming objective.

12. The method of any one of claims 8 to 11, wherein the farming objective comprises optimizing a performance of farming actions in the field for a time efficiency.

13. The method of any one of claims 8 to 11, wherein the farming objective comprises optimizing a performance of farming actions at interaction points in the field for a cost efficiency.

14. The method of any one of claims 8 to 11, wherein the farming objective comprises optimizing a performance of farming actions at interaction points in the operating environment outside the field.

15. A farming machine (100) comprising:
a locomotion mechanism configured to propel the farming machine through an operating environment comprising a field when actuated, and wherein the locomotion mechanism is configurable between a plurality of locomotion mechanism states;
an identification system configured to capture images of the field and identify interaction points in the field based on the images;
a control system comprising one or more processors configured to generate a state prescription for the farming machine; and
a non-transitory computer-readable storage medium comprising computer program instructions for generating the state prescription, the instructions, when actuated by the one or more processors, causing the one or more processors to:
access (610) a path of the farming machine through a field, the path comprising a plurality of interaction points identified by the identification system, and one or more of the interaction points corresponding to farming actions the farming machine performs at the interaction point to accomplish a farming objective;
apply (620) a state prescription model to the path to generate the state prescription for the farming machine, the state prescription model:
for each interaction point of the plurality of interaction points along the path,
determine (622), for each of the plurality of locomotion mechanism states, an objective score for the interaction point based on farming actions performed at the point and the locomotion mechanism state; and
identify (624) the locomotion mechanism state having a highest objective score at the point as a prescribed locomotion mechanism state for the interaction point;
generate (630) the state prescription for the path, the state prescription comprising the prescribed locomotion mechanism state for each interaction point of the plurality of interaction points on the path; and
actuate (640) the locomotion mechanism of the farming machine to implement the locomotion mechanism state prescription as the farming machine traverses the path in the field.
